# EUROPÄISCHE PATENTSCHRIFT

(11) **EP 3 407 453 B1**
(45) Veröffentlichungstag und Bekanntmachung des Hinweises auf die Patenterteilung: **23.02.2022**
(21) Anmeldenummer: 17172185.5
(22) Anmeldetag: 22.05.2017
(51) Int. Cl.: H02J 3/04, H02J 3/06, H02J 3/12, H02J 3/38, H02J 3/14, H02J 3/00, H02J 13/00

(54) **STABILISIERUNG EINES ELEKTRISCHEN STROMNETZES**
STABILIZING OF AN ELECTRIC NETWORK
STABILISATION D'UN RÉSEAU DE COURANT ÉLECTRIQUE

(43) Veröffentlichungstag der Anmeldung: 28.11.2018
(73) Patentinhaber: Siemens Aktiengesellschaft, 80333 München (DE)
(72) Erfinder: WEGEHAUPT, Klemens, 91639 Wolframs-Eschenbach (DE)

(56) Entgegenhaltungen:
- WO-A1-2014/060147
- WO-A1-2015/032598
- WO-A1-2015/082005
- WO-A1-2015/082005
- DE-A1-102011 122 656
- Anonymous: "P3 - Policy 3: Operational Security" In: "Continental Europe Operation Handbook", 19. März 2009 (2009-03-19), European Network of Transmission System Operators for Electricity (ENTSOE), XP055417600, Seiten P3-1, * Kapitel A.3, A.4, B.-D. *
- RAMON ZAMORA ET AL: "Multi-Layer Architecture for Voltage and Frequency Control in Networked Microgrids", IEEE TRANSACTIONS ON SMART GRID, 1. Januar 2016 (2016-01-01), Seiten 1-1, XP055417480, USA ISSN: 1949-3053, DOI: 10.1109/TSG.2016.2606460
- S. JADID ET AL: "Energy and reserve scheduling of microgrid using multi-objective optimization", ELECTRICITY DISTRIBUTION (CIRED 2013), 22ND INTERNATIONAL CONFERENCE AND EXHIBITION ON, 1. Januar 2013 (2013-01-01), Seiten 0660-0660, XP055417482, DOI: 10.1049/cp.2013.0865 ISBN: 978-1-84919-732-8

## Beschreibung

Die vorliegende Erfindung betrifft allgemein die Stabilität von Stromnetzen und im Besonderen Mechanismen zur Stabilisierung von Stromnetzen. Die vorliegende Erfindung betrifft insbesondere ein Verfahren und eine Vorrichtung zum Stabilisieren eines an einem übergeordneten Stromnetz angeschlossenen elektrischen Stromnetzes.

Mikronetze oder auf Englisch "Microgrids" sind Stromnetze, welche einer bestimmten Region und zusätzlich einem bestimmten Komplex von elektrischen Verbrauchen und/oder Stromerzeugern zugeordnet sind. Ein Mikronetz kann beispielsweise ein sog. Industrienetz oder ein Campusnetz sein, über welche einem Industriekomplex bzw. einem Universitätsgelände, insbesondere einem Universitätsgelände mit Forschungseinrichtungen, zugeordnete elektrische Verbraucher mit ausreichend Energie bzw. Strom versorgt werden. Ein "Industriekomplex" kann beispielsweise eine Miene zum Abbau von Rohstoffen, eine oder mehrere Ölförderanlagen oder eine industrielle Anlage zum Durchführen von Fracking sein.

An Mikronetzen sind jedoch häufig nicht nur elektrische Verbraucher sondern auch elektrische Energieerzeuger angeschlossen. Energieerzeuger können beispielsweise regenerative Energieerzeuger wie Photovoltaikanlagen oder Windkraftanlagen sein. Außerdem können an einem Mikronetz auch elektrische Energiespeichersysteme angeschlossen sein. Dies gilt insbesondere im Zusammenhang mit der Verwendung von regenerativen Energiequellen, so dass abhängig von der verfügbaren Menge von erzeugtem Strom und der benötigten Menge an Strom elektrische Energie in das Energiespeichersystem eingespeist oder von diesem entnommen werden kann.

Um eine zuverlässige elektrische Energieversorgung zu gewährleisten, ist es erforderlich, den Zustand eines Stromnetzes zu überwachen und, falls eine für den Zustand indikative elektrische Größe des Stromnetzes einen vorgegebenen zulässigen Bereich überschreitet, geeignete Maßnahmen zur Stabilisierung des Stromnetzes zu ergreifen. Der Zustand eines Stromnetzes kann insbesondere anhand der elektrischen Größen Spannung, Übertragungsleistung und/oder Frequenz charakterisiert werden. An einem Stromnetz angeschlossene und betriebene elektrische Energiespeichersysteme haben jedoch eine stabilisierende Wirkung, so dass die betreffende elektrische Größe weniger indikativ für den aktuellen Zustand des Stromnetzes ist. Dies hat zur Folge, dass eine Erkennung von vorliegenden Störungen, welche zu einer zumindest gewissen Instabilität des Stromnetzes führen, nur schwer erkannt werden können. Ein Ergreifen von geeigneten Maßnahmen für eine Stabilisierung des Stromnetzes wird dadurch erschwert.

Die DE 10 2011 122656 A1 beschreibt ein Verfahren und eine Vorrichtung zur Stabilisierung von Energieversorgungsnetzen. Hierbei wird die Stabilisierung dezentral auf der Ebene von regionalen Niederspannungsnetzen durchgeführt, welche mit einem übergeordneten Verbundnetz verbunden sind. Dabei werden bei einem Unter- oder Überschreiten von vorgegebenen Frequenzgrenzen in dem Verbundnetz und/oder zumindest einem regionalen Niederspannungsnetz ausgewählte Stromverbraucher in den regionalen Niederspannungsnetzen von ihrer Stromversorgung gezielt ab- oder zugeschaltet.

Die WO 2015/082005 A1 offenbart ein Verfahren zum Stabilisieren eines elektrischen Energieversorgungssystems, welches zumindest drei Versorgungsebenen umfasst. An einer untersten Versorgungsebene sind elektrische Verbraucher angebunden, wobei jedem Verbraucher eine intelligente Messvorrichtung zugeordnet ist. Mittels der intelligenten Messvorrichtungen wird durch Beobachtung beispielsweise der Netzfrequenz oder der Netzspannung eine aktuelle Netzsituation in zumindest einem Teilabschnitt des Energieversorgungssystems überwacht. Ferner werden von den intelligenten Messvorrichtungen dezentral Änderungen der Netzsituation bzw. den Netzzustandes registriert und die jeweiligen elektrischen Verbraucher entsprechend einer vorgegebenen Priorität in Bezug auf ihren Leistungs- bzw. Energiebezug gesteuert.

Der vorliegenden Erfindung liegt die Aufgabe zugrunde, bei Stromnetzen mit zumindest einem angeschlossenen Energiespeichersystem eine zuverlässige Charakterisierung des Zustandes des Stromnetzes vorzunehmen und basierend auf dieser Charakterisierung ggf. geeignete Maßnahmen für eine effektive Stabilisierung des Stromnetzes zu ergreifen.

Diese Aufgabe wird gelöst durch die Gegenstände der unabhängigen Patentansprüche. Vorteilhafte Ausführungsformen, weitere Merkmale und Details der vorliegenden Erfindung ergeben sich aus den abhängigen Ansprüchen.

Gemäß einem ersten Aspekt der Erfindung wird ein Verfahren zum Stabilisieren eines elektrischen Stromnetzes, das zumindest ein angeschlossenes Energiespeichersystem aufweist, beschrieben. Das Stromnetz ist ein an einem übergeordneten Stromnetz angeschlossenes Stromnetz, welche häufig auch als sog. Mikronetz bzw. Microgrid bezeichnet wird. Das beschriebene Verfahren umfasst ein Festlegen eines ersten Bereiches für eine elektrische Größe des Stromnetzes um einen Sollwert; ein Festlegen eines zweiten Bereiches für die elektrische Größe des Stromnetzes um den Sollwert, wobei der zweite Bereich größer ist als der erste Bereich und kleiner ist als ein dritter Bereich um den Sollwert, wobei der dritte Bereich einer Abschaltung von zumindest einem Teil des Stromnetzes zugeordnet ist; ein Erfassen der elektrischen Größe; und ein Vergleichen der erfassten elektrischen Größe mit dem ersten Bereich und mit dem zweiten Bereich. Das beschriebene Verfahren weist ferner folgende Schritte auf:
(a) wenn die elektrische Größe innerhalb des ersten Bereichs liegt, Charakterisieren des Zustands des Stromnetzes als ein Normalzustand;
(b) wenn die elektrische Größe außerhalb des ersten Bereichs und innerhalb des zweiten Bereichs liegt und sich das Stromnetz in einem ersten Betriebszustand, in dem elektrische Leistung von dem Stromnetz an das übergeordnete Stromnetz transferiert wird, oder in einem zweiten Betriebszustand, in dem eine elektrische Leistungsbilanz zwischen dem Stromnetz und dem übergeordneten Stromnetz zumindest annähernd ausgeglichen ist, befindet, Aufrufen einer ersten Prozedur zum Stabilisieren des Stromnetzes, bei welcher ein erster Zähler inkrementiert wird und der weitere Verlauf der ersten Prozedur von dem Stand des ersten Zählers abhängt; und
(c) wenn die elektrische Größe außerhalb des zweiten Bereichs liegt Aufrufen einer zweiten Prozedur zum Stabilisieren des Stromnetzes, bei welcher ein zweiter Zähler inkrementiert wird und der weitere Verlauf der zweiten Prozedur von dem Stand des zweiten Zählers abhängt, wobei die zweite Prozedur zum Stabilisieren des Stromnetzes ein Entkoppeln des Stromnetzes vom übergeordneten Stromnetz umfasst.

Dem beschriebenen Verfahren liegt die Erkenntnis zugrunde, dass durch die Verwendung von zwei unterschiedlichen Zählern, die bei unterschiedlichen Prozeduren zum Verbessern bzw. Erhöhen der Stabilität des Stromnetzes verwendet werden, abhängig von (dem aktuellen Wert) der elektrischen Größe besonders geeignete spezifische Maßnahmen ergriffen werden können, die (in den allermeisten Fällen) zu einer raschen Stabilisierung des Stromnetzes führen. Insbesondere kann durch eine geeignete Wahl der (zur Verfügung stehenden) spezifischen Maßnahmen erreicht werden, dass diese Maßnahmen auf der einen Seite möglichst schnell zu der gewünschten Stabilisierung führen und auf der anderen Seite zusätzliche Instabilitäten infolge eines evtl. zu heftigen Steuer- bzw. Regeleingriffs vermieden werden.

Das beschriebene Verfahren kann auf automatische Weise, d.h. insbesondere ohne einen Eingriff durch eine Bedienperson, erfolgen. Dabei werden die verschiedenen spezifischen Maßnahmen automatisch und ohne die Notwendigkeit einer menschlichen Verstandestätigkeit aufgerufen.

Das beschriebene Verfahren hat den Vorteil, dass es größtenteils in einer Datenverarbeitungseinrichtung mittels geeigneter "Software" realisiert werden kann. Hinsichtlich "Hardware", die für die Durchführung des Verfahrens erforderlich ist, ist im Wesentlichen lediglich eine geeignete Messeinrichtung erforderlich, welche der Datenverarbeitungseinrichtung die betreffenden Messwerte liefert. Diese Messwerte können auf einfache Weise und in der Regel sogar mit ohnehin bei den meisten Stromnetzen bereits vorhandenen Messgeräten erfasst werden. Das beschriebene Verfahren kann jederzeit und insbesondere in regelmäßigen zeitlichen Abständen durchgeführt werden kann. Insbesondere kann eine kontinuierliche bzw. quasi kontinuierliche Erfassung der elektrischen Größe und damit eine quasi kontinuierliche Überwachung des Stromnetzes durchgeführt werden. Dadurch kann die Betriebssicherheit des betreffenden Stromnetzes signifikant erhöht werden.

Unter dem Begriff "Betriebszustand des Stromnetzes" können Betriebszustände von verschiedenen Komponenten des Stromnetzes und insbesondere von verschiedenen an das Stromnetz angeschlossenen elektrischen Einrichtungen zusammengefasst werden. Die elektrischen Einrichtungen können, wie einleitend beschrieben, elektrische Verbraucher, Energieerzeuger oder Energiespeichersysteme sein. Insbesondere kann der "Betriebszustand des Stromnetzes" sich jedoch auf den Betriebszustand eines Mikronetzes und dessen aktuellen Verhältnisses zu einem übergeordneten Stromnetz beziehen, mit welchem das Mikronetz verbunden ist, wobei unter dem Begriff "Verhältnis" eine Energie- bzw. Leistungsbilanz zwischen den beiden Netzen verstanden werden kann. Der erste Betriebszustand liegt dann vor, wenn elektrische Energie bzw. Leistung von dem Mikronetz an das übergeordnete Stromnetz transferiert bzw. aus Sicht des Mikronetzes exportiert wird. Der zweite Betriebszustand liegt dann vor, wenn die elektrische Leistungsbilanz zwischen den beiden Netzen ausgeglichen ist und kein Energie- bzw. Leistungstransfer vorliegt. Dies bedeutet, dass in dem Mikronetz gerade so viel Leistung erzeugt wird, wie aktuell verbraucht wird. Ein dritter, bisher nicht genannter Betriebszustand des Stromnetzes kann dann vorliegen, wenn elektrische Energie bzw. Leistung von dem übergeordneten Stromnetz an das Mikronetz transferiert bzw. aus Sicht des Mikronetzes importiert wird.

Die elektrische Größe des Stromnetzes kann beispielsweise die Spannung oder die Frequenz des Stromnetzes sein. Auch eine Kombination von Spannung und Frequenz ist möglich. Dies hat den Vorteil, dass eine besonders einfach und präzise (mit einfachen Mittels) erfassbare elektrische Größe verwendet wird.

Unter dem Ausdruck "Aufrufen einer Prozedur" ist in diesem Dokument insbesondere zu verstehen, dass die Prozedur vollständig durchgeführt wird. Das Inkrementieren des betreffenden Zählers kann gleich zu Beginn der Prozedur oder später erfolgen, wenn bereits zumindest ein Schritt der betreffenden Prozedur abgearbeitete worden ist.

Unter dem Ausdruck "Erfassen der elektrischen Größe" ist in diesem Dokument insbesondere zu verstehen, dass ein aktueller Wert der elektrischen Größe des Stromnetzes erfasst bzw. von einer geeigneten Messeinrichtung gemessen wird. Das "Vergleichen der erfassten elektrischen Größe" mit dem betreffenden Bereich, welches insbesondere in einer Datenverarbeitungseinrichtung durchgeführt wird, welche auch zumindest einige andere Schritte des beschriebenen Verfahrens steuert bzw. durchführt, ist insbesondere dahingehend zu verstehen, dass der betreffende Messwert mit einem Referenzwert verglichen wird, welcher eine Grenze des betreffenden Bereichs definiert.

Unter dem Ausdruck "einer Abschaltung zugeordnet" kann insbesondere verstanden werden, dass dann, wenn die erfasste elektrische Größe eine Grenze des dritten Bereiches erreicht oder überschreitet, die Abschaltung des zumindest einen Teils des Stromnetzes durchgeführt wird. Eine Abschaltung kann in bekannter Weise mittels geeigneter Sicherungseinrichtungen durchgeführt werden.

Wenn sich das Stromnetz in dem Normalzustand befindet, dann kann dieses ohne besondere Einschränkungen normal betrieben werden. Normal betrieben kann beispielsweise bedeuten, dass angeschlossene Verbraucher bzw. Energieerzeuger innerhalb von üblichen Grenzen elektrische Leistung aus dem Stromnetz entnehmen bzw. in das Stromnetz einspeisen können. Insbesondere kann ein angeschlossenes elektrisches Energiespeichersystem in beliebig gewünschter Weise betrieben werden. Damit ist ein sowohl hinsichtlich elektrischer Belastung bzw. Verschleiß des Energiespeichersystems als auch ein hinsichtlich Energieeffizienz bzw. Stärke der Leistungsabgabe oder Leistungseinspeisung optimaler Betrieb des elektrischen Energiespeichersystems möglich. Insbesondere stellt der Energiespeicher eine geeignete Menge an Wirkleistung und/oder Blindleistung an das Stromnetz zur Verfügung bzw. nimmt diese von dem Stromnetz auf.

Gemäß einem Ausführungsbeispiel der Erfindung ist der erste Bereich vollständig in dem zweiten Bereich enthalten. Alternativ oder in Kombination ist der zweite Bereich vollständig in dem dritten Bereich enthalten. "Vollständig enthalten" bedeutet in diesem Zusammenhang, dass alle von dem ersten bzw. von dem zweiten Bereich umfassten Werte der elektrischen Größe in dem zweiten bzw. dem dritten Bereich enthalten sind. Da alle genannten Bereiche um den Sollwert des Stromnetzes herum festgelegt sind, liegt ein Messwert außerhalb eines Bereiches, wenn er eine untere Bereichsgrenze unterschritten oder eine obere Bereichsgrenze überschritten hat. Damit können mit dem beschriebenen Verfahren auf vorteilhafte Weise störungsbedingte Abweichungen der elektrischen Größe von dem Sollwert sowohl nach unten als auch nach oben zum Zwecke einer effektiven Stabilisierung des Stromnetzes behandelt werden.

Gemäß einem weiteren Ausführungsbeispiel der Erfindung wird die elektrische Größe erst dann als außerhalb des ersten Bereiches, des zweiten Bereiches bzw. des dritten Bereiches liegend betrachtet, wenn die Größe für eine vorbestimmte Zeitspanne außerhalb des betreffenden Bereiches liegt. Dies hat den Vorteil, dass kurzfristige Fluktuationen der elektrische Größe, welche auf keiner Störung basieren und daher nicht indikativ für eine Instabilität des Stromnetzes sind, ignoriert werden nicht zu der Auslösung einer entsprechenden in einem solchen Fall unnötigen Stabilisierungsprozedur führen. In diesem Zusammenhang wird darauf hingewiesen, dass Stabilisierungsprozeduren, die nur bei einer vermeintlichen und nicht wirklichen Instabilität (ohne eine externe Störung) durchgeführt werden, zu einer unerwünschten Destabilisierung des Stromnetzes führen können.

Die vorbestimmte Zeitspanne kann abhängig von der Architektur des Stromnetzes und/oder von den an das Stromnetz angeschlossenen elektrischen Geräten frei gewählt werden. Typische Zeitspanne können einige Millisekunden sein. Beispielsweise kann die Zeitspanne zwischen 1 ms und 100 ms, zwischen 5 ms und 50 ms oder zwischen 10 ms und 25 ms lang sein.

Gemäß einem weiteren Ausführungsbeispiel der Erfindung ist die elektrische Größe ein Vektor mit zumindest zwei Komponenten. Ferner ist bzw. sind der erste Bereich, der zweite Bereich und/oder der dritte Bereich ein entsprechend der Dimensionalität des Vektors mehrdimensionaler Bereich.

Der Vektor kann ein Vektor mit zwei Komponenten sein, wobei eine Komponente die Spannung des Stromnetzes und die andere Komponente die Frequenz des Stromnetzes ist. Die in diesem Fall zweidimensionalen Bereiche können in einem Koordinatensystem, in dem der Ursprung durch die beiden Sollwerte für die Spannung und für die Frequenz definiert ist, verschieden große Rechtecke sein, die alle den Koordinatenursprung enthalten. Dabei können die Rechtecke in Bezug auf die beiden Koordinatenachsen symmetrisch oder asymmetrisch zum Koordinatenursprung sein. Allerdings sind auch andere geometrische Formen für die verschiedenen Bereiche möglich.

Gemäß einem weiteren Ausführungsbeispiel der Erfindung wird nach einer Charakterisierung des Zustandes des Stromnetzes als Normalzustand das Verfahren erneut ausgeführt. Dies bedeutet, dass ein sich im Normalzustand befindliches Stromnetz (quasi) kontinuierlich überwacht wird. Damit können sofort, wenn eine Abweichung von dem Normalzustand bzw. ein Fehlerzustand (zuverlässig) erkannt wird, Maßnahmen zur Stabilisierung des Stromnetzes ergriffen werden. Damit ermöglicht das beschriebene Verfahren auf vorteilhafte Weise eine sehr schnelle Reaktionszeit für eine geeignete Netzstabilisierung.

Gemäß einem weiteren Ausführungsbeispiel der Erfindung wird das Verfahren bei verschiedenen Betriebszuständen des Stromnetzes durchgeführt. In dem ersten Betriebszustand wird elektrische Leistung von dem Stromnetz in ein übergeordnetes Stromnetz transferiert. In dem zweiten Betriebszustand wird zumindest annähernd keine Leistung zwischen dem Stromnetz und dem übergeordneten Stromnetz transferiert. In einem dritten Betriebszustand wird elektrische Leistung von dem übergeordneten Stromnetz in das Stromnetz transferiert. Das Verfahren gemäß diesem Ausführungsbeispiel weist ferner folgende Schritte auf;
Bestimmen, ob sich das Stromnetz in dem ersten Betriebszustand, in dem zweiten Betriebszustand oder in dem dritten Betriebszustand befindet, und
(b') wenn die elektrische Größe außerhalb des ersten Bereichs und innerhalb des zweiten Bereichs liegt und sich das Stromnetz in dem dritten Betriebszustand befindet, Charakterisieren des Zustands des Stromnetzes als der Normalzustand.

Anschaulich ausgedrückt wird in dem dritten Betriebszustand, d.h. wenn das Stromnetz elektrische Leistung von dem übergeordneten Stromnetz importiert, auf das Aufrufen bzw. Durchführen der ersten Prozedur verzichtet und stattdessen ein fehlerfreier Zustand des Stromnetzes angenommen, welcher keinerlei Stabilisierungsmaßnahmen erfordert. Diese Fallunterscheidung zwischen den beiden ersten Betriebszuständen einerseits und dem zweiten Betriebszustand andererseits beruht auf der Erkenntnis, dass im Falle eines Imports von elektrischer Leistung in der Praxis oft auch "Störungen importiert" werden, welche zu einer gewissen Änderung der elektrischen Größe führen, welche aber für die Stabilität des (aus Sicht des übergeordneten Stromnetzes untergeordneten) Stromnetzes bzw. Mikronetzes nicht wirklich indikativ sind. Daher kann es in vielen Anwendungsfällen vorteilhaft sein, wenn in dem dritten Betriebszustand im Falle einer Änderung der elektrischen Größe weniger stark mit Stabilisierungsmaßnahmen reagiert wird.

Ein Import von Störungen kann dann insbesondere dann auftreten, wenn das Mikronetz mit einem übergeordneten Stromnetz (z.B. ein Übertragungsnetz, ein Versorgungsnetz, etc.) verbunden ist und dieses übergeordnete Stromnetz Energie bzw. Leistung in das Mikronetz speist. In dem übergeordneten Stromnetz kann es aufgrund verschiedener Ereignisse (Laständerungen, Einspeisung durch erneuerbare Energiequellen) zu Schwankungen in Frequenz und Spannung kommen. Eine solche Schwankung weist jedoch nicht zwangsläufig auf einen "Störfall" hin. Findet eine Schwankung innerhalb des ersten Bereiches statt, so ist diese zwar als "Störung" zu werten, wird aber nicht sofort als "sicherheitskritisch" eingestuft. Es würde nämlich sonst häufig zu falsch erkannten sicherheitskritischen Störungen kommen, die zu häufigen unnötigen Sicherungsmaßnahmen (z.B. einem Abtrennen des Mikronetzes vom übergeordneten Stromnetz) führen würde.

Die technischen Bedeutungen der verschiedenen Betriebszustände wurden bereits vorstehend im Detail erläutert und werden deshalb an dieser Stelle nicht noch einmal beschrieben.

Gemäß einem weiteren Ausführungsbeispiel der Erfindung umfasst die erste Prozedur ein Vergleichen des inkrementierten ersten Zählers mit einem zweiten Schwellenwert und
(a) wenn der Wert des ersten Zählers größer ist als oder gleich ist wie der zweite Schwellenwert, ein Aufrufen der zweiten Prozedur; und
(b) wenn der Wert des ersten Zählers kleiner ist als der zweite Schwellenwert, ein Vergleichen des inkrementierten ersten Zählers mit einem ersten Schwellenwert, wobei der weitere Verlauf der ersten Prozedur von dem Ergebnis des Vergleichens abhängt.

Durch die Verwendung von zwei Schwellenwerten für den ersten Zähler kann das beschriebene Verfahren noch genauer den Bedarf an Stabilisierungsmaßnahmen für das Stromnetz erkennen. Im Ergebnis führt dies zu einer weiteren Verbesserung der Stabilisierung des Stromnetzes, weil für den jeweiligen Zustand des Netzes stets eine weitgehend optimale Stabilisierungsmaßnahme zum Einsatz kommen kann.

Gemäß einem weiteren Ausführungsbeispiel der Erfindung umfasst die erste Prozedur ferner folgende Schritte:
(a) wenn der Wert des ersten Zählers kleiner ist als der erste Schwellenwert, Charakterisieren des Zustands des Stromnetzes als der Normalzustand, und
(b) wenn der Wert des ersten Zählers größer ist als oder gleich ist wie der erste Schwellenwert, Erfassen einer weiteren elektrischen Größe des übergeordneten Stromnetzes. Ferner umfasst und
Vergleichen der erfassten weiteren elektrischen Größe mit einem weiteren Sollwert für die weitere elektrischen Größe, wobei der weitere Verlauf der ersten Prozedur von dem Ergebnis des Vergleichens (der erfassten weiteren elektrischen Größe mit dem weiteren Sollwert für die weitere elektrischen Größe) abhängt.

Die weitere Größe kann insbesondere die Frequenz und/oder die Spannung des übergeordneten Netzes sein.

Anschaulich ausgedrückt wird bei der Bewertung der erfassten elektrische Größe des Stromnetzes nun auch eine weitere elektrische Größe berücksichtigt, die dem übergeordneten Stromnetz zugeordnet ist. Damit wird berücksichtigt, dass zumindest dann, wenn es eine gewisse elektrische Kopplung zwischen den beiden Stromnetzen gibt, die elektrische Größe des Stromnetzes nicht allein indikativ für die Stabilität des Stromnetzes ist, weil diese auch, abhängig von der Stärke der Kopplung zwischen beiden Stromnetzen, von dem Zustand des übergeordneten Stromnetzes und insbesondere von ggf. vorhandenen Fehlern in dem übergeordneten Stromnetz abhängt. Die Berücksichtigung der weiteren elektrischen Größe trägt somit zusätzlich zu einer Verbesserung der Stabilisierung des Stromnetzes durch das beschriebene Verfahren bei.

Gemäß einem weiteren Ausführungsbeispiel der Erfindung weist die erste Prozedur ferner folgende Schritte auf:
(a) wenn die weitere elektrische Größe innerhalb einer vorgegebenen Toleranz (der weiteren elektrischen Größe) gleich ist wie der weitere Sollwert, ein Charakterisieren des Zustands des Stromnetzes als der Normalzustand; und
(b) wenn die weitere elektrische Größe unter Berücksichtigung der vorgegebenen Toleranz ungleich ist wie der weitere Sollwert, ein Überprüfen, ob oder ob nicht zumindest eine zusätzliche externe elektrische Last für das Stromnetz verfügbar ist und in zulässiger Weise zuschaltbar ist, wobei der weitere Verlauf der ersten Prozedur von dem Ergebnis des Überprüfens abhängt. Dies hat den Vorteil, dass nur dann verfügbare zusätzliche elektrische Lasten zum Einsatz kommen, wenn dies zum einen wirklich erforderlich ist und zum anderen auch zulässig ist.

An dieser Stelle wird erneut darauf hingewiesen, dass ein Charakterisieren des Zustands des Stromnetzes als Normalzustand nicht bedeutet, dass hinsichtlich Charakterisierung und eventueller Stabilisierung nichts Weiteres mehr unternommen wird. Vielmehr wird der Ablauf des beschriebenen Verfahrens erneut von Anfang an durchlaufen. Sollte sich in der Zwischenzeit die elektrische Größe nicht oder nur unwesentlich geändert haben, dann wird erneut die erste Prozedur aufgerufen, wobei dann der erste Zähler weiter inkrementiert ist und, sofern dieser Zähler dann einen ausreichend großen Wert hat, geeignete Maßnahmen zur Stabilisierung des Stromnetzes ergriffen werden.

Gemäß einem weiteren Ausführungsbeispiel der Erfindung weist die erste Prozedur ferner folgende Schritte auf:
(a) wenn zumindest eine zusätzliche externe elektrische Last für das Stromnetz verfügbar ist und in zulässiger Weise zuschaltbar ist, Zuschalten dieser zumindest einen zusätzlichen externen elektrischen Last; und Charakterisieren des Zustands des Stromnetzes als der Normalzustand; und
(b) wenn zumindest eine zusätzliche externe elektrische Last für das Stromnetz nicht verfügbar ist und/oder nicht in zulässiger Weise zuschaltbar ist, Aufrufen der zweiten Prozedur.

Auch an dieser Stelle bleibt anzumerken, dass nach einem Charakterisieren des Zustands des Stromnetzes als der Normalzustand das beschriebene Verfahren erneut durchlaufen wird, wobei es insbesondere aufgrund eine Inkrementierung von Zählern auch dann zu Stabilisierungsmaßnahmen kommen kann, wenn sich der Wert der erfassten elektrischen Größe nicht geändert hat.

Es wird darauf hingewiesen, dass die erste Prozedur auch als eine Art Zwischenprozedur oder intermediäre Prozedur angesehen werden kann, in welcher zwar gewisse physikalische Stabilisierungsmaßnahmen vorgenommen werden (können), welche jedoch nicht dahingehend eigenständig sind, dass sie das beschrieben Verfahren erfolgreich beenden. Vielmehr kann die erste Prozedur so ausgestaltet sein, dass diese dahingehend endet, dass entweder der Zustand des Stromnetzes als der Normalzustand charakterisiert wird oder die (nachstehend anhand von weiteren Ausführungsbeispielen im Detail erläuterte) zweite Prozedur aufgerufen wird.

Gemäß einem weiteren Ausführungsbeispiel der Erfindung weist die zweite Prozedur folgende Schritte auf: Setzen des zweiten Zählers auf den Wert Null; Öffnen einer elektrischen Verbindung zwischen dem Stromnetz und dem übergeordneten Stromnetz; erneutes Erfassen der elektrischen Größe des Stromnetzes; und Vergleichen der erneut erfassten elektrischen Größe des Stromnetzes mit einem vorgegebenen Sollbereich für die elektrischen Größe, wobei der weitere Verlauf der zweiten Prozedur von dem Ergebnis des Vergleichens (der erneut erfassten weiteren elektrischen Größe mit dem vorgegebenen Sollbereich für die elektrische Größe) abhängt.

Durch das Öffnen der elektrischen Verbindung werden die beiden Stromnetze elektrisch voneinander entkoppelt. Dadurch haben evtl. vorhandene Störungen in dem übergeordneten Stromnetz keine Auswirkungen mehr und das (untergeordnete) Stromnetz bzw. das Mikronetz sind geschützt.

Gemäß einem weiteren Ausführungsbeispiel der Erfindung weist die zweite Prozedur ferner folgende Schritte auf: (a) wenn die erneut erfasste elektrischen Größe (des Stromnetzes) innerhalb des vorgegebenen Sollbereichs für die elektrische Größe (des Stromnetzes) liegt, Erfassen einer weiteren elektrischen Größe des übergeordneten Stromnetzes, wobei der weitere Verlauf der zweiten Prozedur von der erfassten weiteren elektrischen Größe des übergeordneten Stromnetzes abhängt; und (b) wenn die erneut erfasste elektrische Größe (des Stromnetzes) außerhalb des vorgegebenen Sollbereichs für die elektrischen Größe (des Stromnetzes) liegt, Inkrementieren des zweiten Zählers. Ferner weist die zweite Prozedur ein Vergleichen der erneut erfassten elektrischen Größe des Stromnetzes mit einem vorgegebenen Grenzwert auf, wobei der weitere Verlauf der zweiten Prozedur von dem Ergebnis des Vergleichens (der erneut erfassten elektrischen Größe des Stromnetzes mit einem vorgegebenen Grenzwert) und dem Wert des zweiten Zählers abhängt.

Die weitere elektrische Größe des übergeordneten Stromnetzes kann insbesondere die gleiche sein wie die vorstehend im Zusammenhang mit der ersten Prozedur beschriebene weitere elektrische Größe. Insbesondere kann die weitere elektrische Größe die Frequenz und/oder die Spannung des übergeordneten Stromnetzes sein.

Gemäß einem weiteren Ausführungsbeispiel der Erfindung weist die zweite Prozedur ferner folgende Schritte auf:
(a) wenn die erneut erfasste elektrische Größe des Stromnetzes kleiner ist als der vorgegebene Grenzwert und der Wert des zweiten Zählers kleiner ist als ein vorgegebener Zählerwert, Entfernen von zumindest einer (externen) elektrischen Last von dem Stromnetz;
(b) wenn die erneut erfasste elektrische Größe des Stromnetzes kleiner ist als der vorgegebene Grenzwert und der Wert des zweiten Zählers größer ist als oder gleich ist wie der vorgegebene Zählerwert, Überführen des Stromnetzes in einem Notfallmodus;
(c) wenn die erneut erfasste elektrische Größe des Stromnetzes größer ist als der vorgegebene Grenzwert und der Wert des zweiten Zählers kleiner ist als der vorgegebene Zählerwert, Abschalten von zumindest einem Stromerzeuger von dem Stromnetz; und
(d) wenn die erneut erfasste elektrische Größe des Stromnetzes größer ist als der vorgegebene Grenzwert und der Wert des zweiten Zählers größer ist als oder gleich ist wie der vorgegebene Zählerwert, Überführen des Stromnetzes in den Notfallmodus.

In dem Notfallmodus kann mittels geeigneter Schutzmaßnahmen wie beispielsweise einer Öffnung von zumindest einem Leistungsschalter das Mikronetz abgeschalten und dadurch eine Zerstörung von Komponenten des Mikronetzes verhindert.

Gemäß einem weiteren Aspekt der Erfindung wird beschrieben eine Vorrichtung zum Stabilisieren eines an einem übergeordneten Stromnetz angeschlossenen elektrischen Stromnetzes mittels eines Verfahrens der vorstehend erläuterten Art, wobei das elektrische Stromnetz zumindest ein angeschlossenes Energiespeichersystem aufweist. Die beschriebene Vorrichtung weist auf eine Erfassungseinrichtung zum Erfassen einer elektrischen Größe des Stromnetzes; und eine Vergleichseinrichtung zum Vergleichen der erfassten elektrischen Größe mit einem ersten Bereich und mit einem zweiten Bereich, wobei der erste Bereich und der zweite Bereich jeweils um einen Sollwert für die elektrische Größe herum festgelegt sind, wobei der zweite Bereich größer ist als der erste Bereich und kleiner ist als ein dritter Bereich um den Sollwert, wobei der dritte Bereich einer Abschaltung von zumindest einem Teil des Stromnetzes zugeordnet ist. Die Vorrichtung weist ferner auf eine Datenverarbeitungseinrichtung, welche programmtechnisch eingerichtet zum:
(a) wenn die elektrische Größe innerhalb des ersten Bereichs liegt, Charakterisieren des Zustands des Stromnetzes als ein Normalzustand;
(b) wenn die elektrische Größe außerhalb des ersten Bereichs und innerhalb des zweiten Bereichs liegt und sich das Stromnetz in einem ersten Betriebszustand, in dem elektrische Leistung von dem Stromnetz an das übergeordnete Stromnetz transferiert wird, oder in einem zweiten Betriebszustand, in dem eine elektrische Leistungsbilanz zwischen dem Stromnetz und dem übergeordneten Stromnetz zumindest annähernd ausgeglichen ist, befindet, Aufrufen einer ersten Prozedur zum Stabilisieren des Stromnetzes, bei welcher ein erster Zähler inkrementiert wird und der weitere Verlauf der ersten Prozedur von dem Stand des ersten Zählers abhängt; und
(c) wenn die elektrische Größe außerhalb des zweiten Bereichs liegt Aufrufen einer zweiten Prozedur zum Stabilisieren des Stromnetzes, bei welcher ein zweiter Zähler inkrementiert wird und der weitere Verlauf der zweiten Prozedur von dem Stand des zweiten Zählers abhängt, wobei die zweite Prozedur zum Stabilisieren des Stromnetzes ein Entkoppeln des Stromnetzes vom übergeordneten Stromnetz umfasst.

Auch der beschriebenen Vorrichtung liegt die Erkenntnis zugrunde, dass durch die Verwendung von zwei unterschiedlichen Zählern für unterschiedliche Prozeduren der aktuelle Zustand des Stromnetzes besonders gut charakterisiert werden kann und besonders spezifische Stabilisierungsmaßnahmen veranlasst bzw. durchgeführt werden können. Insbesondere kann erreicht werden, dass diese Maßnahmen auf der einen Seite möglichst schnell zu der gewünschten Stabilisierung führen und auf der anderen Seite zusätzliche Instabilitäten infolge eines evtl. zu heftigen Steuer- bzw. Regeleingriffs vermieden werden.

Gemäß einem weiteren Ausführungsbeispiel der Erfindung wird ein Computerprogramm zum Stabilisieren eines elektrischen Stromnetzes beschrieben. Das Computerprogramm ist, wenn es von einer Datenverarbeitungseinrichtung ausgeführt wird, zum Durchführen des vorstehend beschriebenen Verfahrens eingerichtet.

Im Sinne dieses Dokuments ist die Nennung eines solchen Computerprogramms gleichbedeutend mit dem Begriff eines Programm-Elements, eines Computerprogrammprodukts und/oder eines computerlesbaren Mediums, das Anweisungen zum Steuern eines Computersystems enthält, um die Arbeitsweise eines Systems bzw. eines Verfahrens in geeigneter Weise zu koordinieren, um die mit dem erfindungsgemäßen Verfahren verknüpften Wirkungen zu erreichen. Das Computerprogramm kann als computerlesbarer Anweisungscode in jeder geeigneten Programmiersprache wie beispielsweise in JAVA, C++ etc. implementiert sein. Das Computerprogramm kann auf einem computerlesbaren Speichermedium (CD-Rom, DVD, Blue-ray Disk, Wechsellaufwerk, flüchtiger oder nicht-flüchtiger Speicher, eingebauter Speicher/Prozessor etc.) abgespeichert sein. Der Anweisungscode kann einen Computer oder andere programmierbare Geräte derart programmieren, dass die gewünschten Funktionen ausgeführt werden. Ferner kann das Computerprogramm in einem Netzwerk wie beispielsweise dem Internet bereitgestellt werden, von dem es bei Bedarf von einem Nutzer herunter geladen werden kann.

Die Erfindung kann sowohl mittels eines Computerprogramms, d.h. einer Software, als auch mittels einer oder mehrerer spezieller elektronischer Schaltungen, d.h. in Hardware oder in beliebig hybrider Form, d.h. mittels Software-Komponenten und Hardware-Komponenten, realisiert werden. Die in diesem Dokument beschriebene Erfindung kann auch unter Verwendung eines "CLOUD" Netzes mit entsprechenden virtuellen Speicherplätzen und entsprechender virtuelle Rechenkapazität durchgeführt werden.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

Weitere Vorteile und Merkmale der vorliegenden Erfindung ergeben sich aus der folgenden beispielhaften Beschreibung derzeit bevorzugter Ausführungsformen.
- Figur 1: zeigt die Kopplung zwischen einem Mikronetz und einem übergeordneten Stromnetz.
- Figur 2: zeigt verschiedene Sicherheitsbereiche für den Betrieb des Mikronetzes für die elektrischen Größen Spannung und Frequenz.
- Figur 3: illustriert den allgemeinen Ablauf eines Stabilisierungsverfahrens für ein Mikronetz, wobei unterschieden wird zwischen drei verschiedenen Betriebszuständen betreffend einen Leistungstransfer zwischen dem Mikronetz und einem übergeordnetes Stromnetz.
- Figur 4: illustriert den Ablauf einer ersten Prozedur zum Stabilisieren des Mikronetzes.
- Figur 5: illustriert den Ablauf einer zweiten Prozedur, die als ungewollte Inselprozedur bezeichnet wird, in welcher das Mikronetz zumindest vorrübergehend von dem übergeordneten Stromnetz entkoppelt wird.

Es wird darauf hingewiesen, dass die nachfolgend beschriebenen Ausführungsformen lediglich eine beschränkte Auswahl an möglichen Ausführungsvarianten der Erfindung darstellen. Insbesondere ist es möglich, die Merkmale einzelner Ausführungsformen in geeigneter Weise miteinander zu kombinieren, so dass für den Fachmann mit den hier explizit dargestellten Ausführungsvarianten eine Vielzahl von verschiedenen Ausführungsformen als offensichtlich offenbart anzusehen sind.

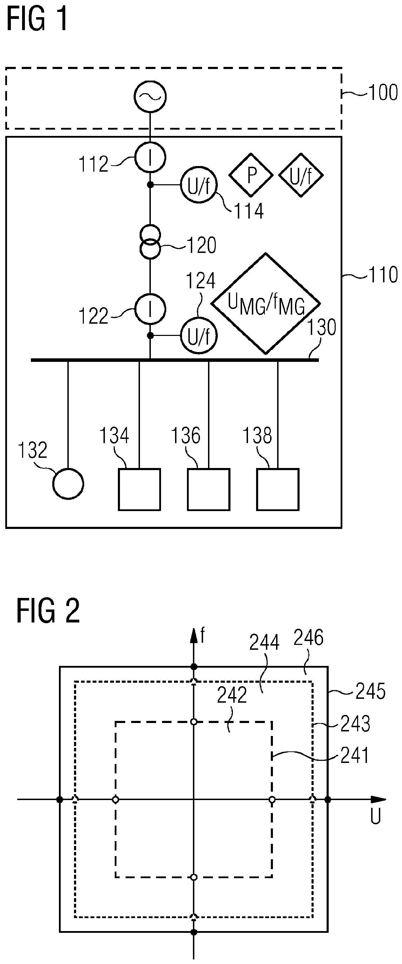

Figur 1 zeigt in einer schematischen Darstellung die Kopplung zwischen einem als Mikronetz bezeichneten Stromnetz 110 und einem übergeordneten Stromnetz 100. Die Kopplung erfolgt über einen Transformator 120, welcher gemäß dem hier dargestellten Ausführungsbeispiel dem Mikronetz 110 zugeordnet ist. Zwischen dem Transformator 120 und dem übergeordneten Stromnetz 100 befindet sich ein Strommessgerät 112 zum Erfassen eines zwischen den beiden Netzen 100 und 110 fließenden elektrischen Stromes I. Ferner ist eine Messeinrichtung 114 vorgesehen, mittels welcher die Spannung U und/oder die Frequenz f des übergeordneten Stromnetzes 100 gemessen werden kann. Basierend auf dem erfassten Strom I und der Spannung U des übergeordneten Stromnetzes 100 wird die Leistung P bestimmt, welche zwischen den beiden Stromnetzen 100 und 110 transferiert wird.

Das Mikronetz 110 weist eine Stromleitung 130 auf, an welcher eine Vielzahl von elektrischen Geräten angeschlossen ist. In Figur 1 sind exemplarisch dargestellt: Ein Energieerzeuger 132, beispielsweise ein Diesel-Generator; ein regenerativer Energieerzeuger 134, beispielsweise eine Photovoltaikanlage oder eine Windturbine; ein Energiespeicher 136, beispielsweise ein Batteriespeichersystem; und eine (beliebige) elektrische Last 138.

Zwischen dem Transformator 120 und der Stromleitung 130 befindet sich ein optionales Strommessgerät 122, welches ebenfalls den Strom I zwischen dem Mikronetz 110 und dem übergeordneten Stromnetz 100 erfasst. Ferner ist eine Messeinrichtung 124 vorgesehen, mittels welcher die Spannung U_{MG} und/oder die Frequenz f_{MG} des Mikronetzes 110 gemessen werden kann.

Es wird darauf hingewiesen, dass der Transformator 120 in bekannter Weise typischerweise dafür sorgt, dass die Spannung U auf der Stromleitung 130 niedriger ist als die Spannung des übergeordneten Stromnetzes 100. In entsprechender Weise ist die Stromstärke I zwischen Transformator 120 und der Stromleitung 130 kleiner als die Stromstärke I zwischen dem Transformator 120 und dem übergeordneten Stromnetz 100.

Figur 2 zeigt verschiedene Sicherheitsbereiche für den Betrieb des Mikronetzes 110 für die elektrischen Größen Spannung U und Frequenz f. Gemäß dem hier dargestellten Ausführungsbeispiel sind drei Bereiche vorgesehen, ein erster Bereich 242, ein zweiter Bereich 244 sowie ein dritter Bereich 246. Der erste Bereich 242 liegt innerhalb eines ersten Fensters 241. Der zweite Bereich 244 liegt innerhalb eines zweiten Fensters 243 und außerhalb des ersten Fensters 241. Der dritte Bereich 246 liegt innerhalb eines dritten Fensters 245 und außerhalb des zweiten Fensters 243.

Gemäß dem hier dargestellten Ausführungsbeispiel haben in einem Koordinatensystem mit der Abszisse Spannung U und der Ordinate Frequenz f alle Fenster eine rechteckige Form. Die Fenster sind jeweils durch einen unteren Grenzwert für die Spannung, einen oberen Grenzwert für die Spannung, einen unteren Grenzwert für die Frequenz sowie einen oberen Grenzwert für die Frequenz definiert. In Figur 2 sind diese Grenzwerte jeweils mit einem kleinen Kreis auf der Abszissen bzw. der Ordinate dargestellt. Es wird jedoch darauf hingewiesen, dass auch andere Fenster-Geometrien möglich sind.

Befinden sich sowohl die Spannung U als auch die Frequenz f des Mikronetzes in dem ersten Bereich 242, dann wird der betreffende Betriebszustand des Mikronetzes als Normalzustand angesehen. Alle an dem Mikronetz angeschlossenen elektrischen Geräte können ohne Einschränkungen betrieben werden. Dies gilt insbesondere für ein Batteriespeichersystem, welches, ohne auf die Stabilität des Mikronetzes zu achten, elektrische Leistung in das Mikronetz einspeisen oder von dem Mikronetz aufnehmen kann.

Befinden sich Spannung U und Frequenz f des Mikronetzes in dem zweiten Bereich 244, dann wird, wie nachfolgend im Detail erläutert, zumindest eine geeignete Prozedur zum Stabilisieren (der elektrischen Größen U und f) des Mikronetzes aufgerufen.

Befinden sich Spannung U und Frequenz f des Mikronetzes in dem dritten Bereich 246, dann werden Sicherungseinrichtungen ausgelöst und das Mikronetz wird abgeschalten bzw. stillgelegt.

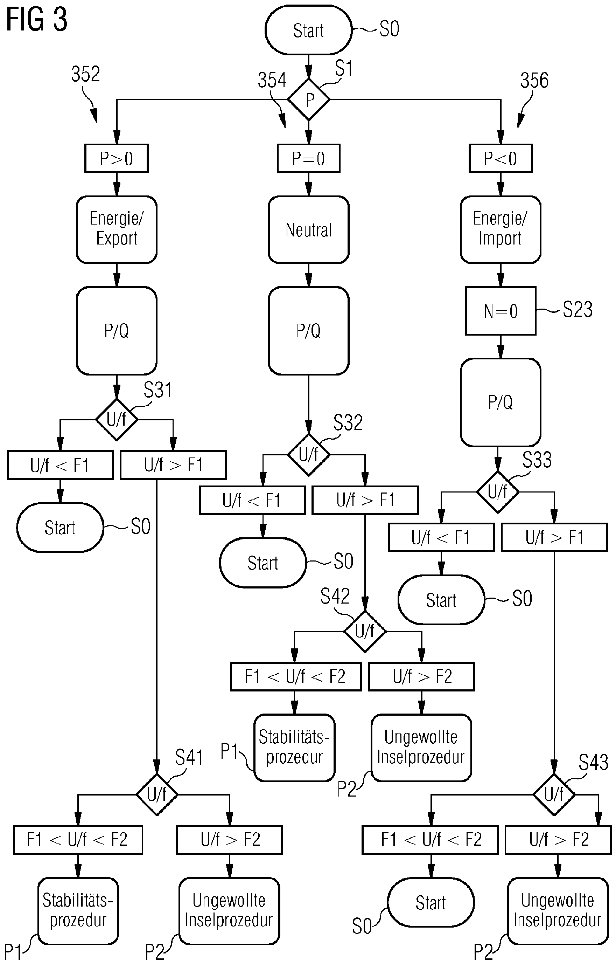

Figur 3 illustriert den allgemeinen Ablauf eines Stabilisierungsverfahrens für ein Mikronetz. Das Verfahren beginnt bei einem Schritt S0. Dies ist der Ausgangszustand des Stabilisierungsverfahrens und wird in den Figuren mit "Start" bezeichnet.

In einem folgenden Schritt S1 wird der aktuelle Betriebszustand des Mikronetzes in Bezug auf einen Transfer von elektrischer Leistung zu oder von dem übergeordneten Stromnetz bestimmt. Dazu wird mit dem Strommessgerät 112 der Strom I zwischen dem Transformator 120 und dem übergeordneten Stromnetz 100 gemessen Ferner wird mit der Messeinrichtung 114 die Spannung des übergeordneten Stromnetzes 100 gemessen. Aus diesem beiden Messwerten wird der entsprechende Leistungsfluss P berechnet. Alternativ oder im Kombination werden das Strommessgerät 122 und die Messeinrichtung 124 zur Erfassung von Strom I und Spannung U (zwischen Transformator 120 und Stromleitung 130) verwendet, um den (gleichen) Leistungsfluss P an anderer Stelle zu berechnen.

Wie aus Figur 3 ersichtlich, hängt der weitere Ablauf entscheidend von dem erfassten Leistungsfluss P ab. Wenn elektrische Leistung von dem Mikronetz in das übergeordnete Stromnetz exportiert wird (P>0), dann folgt der weitere Ablauf einem ersten Ast 352. Ein solcher Betriebszustand des Mikronetzes wird in diesem Dokument als erster Betriebszustand bezeichnet. Wenn die Leistungsbilanz zwischen den beiden Netzen ausgeglichen ist und keine Leistung transferiert wird (P=0), dann folgt der weitere Ablauf einem zweiten Ast 354. Bei P=0 wird der Betriebszustand des Mikronetzes als zweiter Betriebszustand oder als neutraler Zustand bzw. kurz "Neutral" bezeichnet. Wenn elektrische Leistung von dem übergeordneten Stromnetz in das Mikronetz transferiert wird (P<0), dann entspricht dies aus Sicht des Mikronetzes einem Leistungsimport und der weitere Ablauf des beschriebenen Verfahrens folgt einem dritten Ast 356. Ein solcher Leistungsimport wird in diesem Dokument als dritter Betriebszustand bezeichnet.

Aus Figur 3 ist ferner ersichtlich, dass der Ablauf in dem ersten Ast 352 und der Ablauf in dem zweiten Ast 354 identisch ist. Daher werden im Folgenden die beiden Äste 352 (P>0) und 354 (P=0) gemeinsam beschrieben:
Nach der Bestimmung des Betriebszustandes wird ein Energiespeicher bzw. ein Energiespeichersystem zumindest zunächst in einem sog. P/Q Modus betrieben. Dies bedeutet, dass keine in Bezug auf den Energiespeicher externe Einflüsse berücksichtigt werden, welche ein Auswirkung auf die Einspeisung oder Ausspeisung von Wirkleistung und/oder die Ein-oder Ausspeisung von Blindleistung haben. Vorhandene Sollwerte für die Einspeisung und/oder Ausspeisung von Wirk- bzw. Blindleistung können ohne Einschränkung verwendet werden.

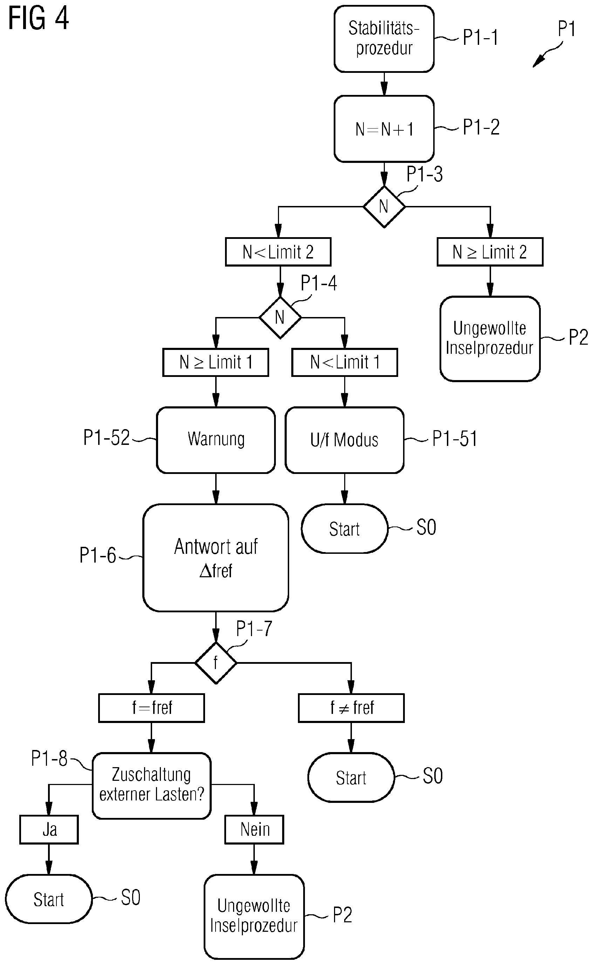

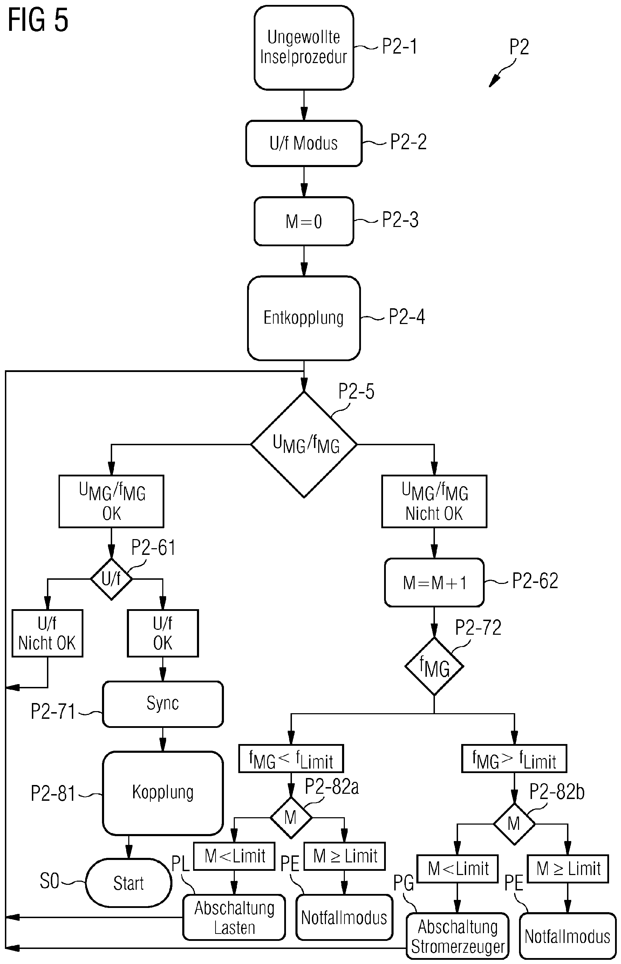

In einem Schritt S31 bzw. S32 wird die Spannung U und die Frequenz f gemessen. Sofern die entsprechenden Werte innerhalb des ersten Fensters (F 1) liegen, dann wird davon ausgegangen, dass sich das Mikronetz in dem Normalzustand befindet und das Verfahren beginnt von vorne mit dem Schritt S0. Sollten die Werte für Spannung U und Frequenz f außerhalb des Fensters 1 liegen, dann wird in einem Schritt S41 bzw. S42 überprüft, ob sich diese Werte in dem o.g. zweiten Bereich bzw. noch innerhalb des zweiten Fensters (F 2) befinden. Sofern dies der Fall ist, dann wird eine erste Prozedur P1 aufgerufen, welche in diesem Dokument auch als Stabilitätsprozedur bezeichnet wird. Die Stabilitätsprozedur wird nachfolgend anhand von Figur 4 beschrieben. Falls die Werte für die Spannung U und die Frequenz f außerhalb des Fensters 2 liegen, dann wird eine zweite Prozedur P2 aufgerufen, welche in diesem Dokument auch als ungewollte Inselprozedur bezeichnet wird. Die ungewollte Inselprozedur wird nachfolgend anhand von Figur 5 beschrieben.

Im Folgenden wird der Ablauf des Verfahrens in dem dritten Ast 356 (Energieimport, P<0) beschrieben. Da der Ablauf in dem drittem Ast 356 sehr ähnlich zu den Abläufen in den beiden anderen Ästen 352 und 354 ist, wird lediglich auf die Unterschiede zwischen dem dritten Ast 356 und den beiden anderen Ästen 352, 354 eingegangen.

Wie aus Figur 3 ersichtlich, wird nach der Erkennung des dritten Betriebszustandes in dem Schritt S1 in einem Schritt S23 ein erster Zähler N auf den Wert N=0 zurückgesetzt. Die Bedeutung dieses ersten Zählers wird nachfolgend anhand der Beschreibung von Figur 4 erläutert.

Der weitere Verlauf in dem dritten Ast 356 ist im Wesentlichen der gleiche wie in den beiden anderen Ästen 352, 354. Insbesondere wird nach der Messung der Spannung und der Frequenz in einem Schritt S33 gleich verfahren wie nach dem Schritt S31 bzw. S32. Ferner entspricht die Messung der Spannung und der Frequenz in einem Schritt S43 dem Schritt S41 bzw. S42. Im Unterschied zu den beiden Ästen 352 und 354 wird im dritten Ast 356 für dem Fall, dass die Werte für Spannung U und Frequenz f außerhalb des Fensters 1 aber noch innerhalb des Fensters 2 liegen, davon ausgegangen, dass sich das Mikronetz in dem Normalzustand befindet. Der erste Zähler N wird nicht geändert. Das Verfahren beginnt dann von vorne mit dem Schritt S0.

Figur 4 illustriert gemäß einem Ausführungsbeispiel der Erfindung den Ablauf der ersten Prozedur P1 zum Stabilisieren des Mikronetzes. Die Prozedur P1 beginnt mit einem Schritt P1-1. In einem darauffolgenden Schritt P1-2 wird der erste Zähler N inkrementiert und dabei um Eins erhöht. Danach wird in einem Schritt P1-3 der aktuelle Zählerstand N des ersten Zählers abgefragt und mit einem zweiten Grenzwert Limit 2 verglichen. Sollte der Zählerstand N größer sein als (oder gleich sein wie) dieser zweite Grenzwert Limit 2, dann wird die zweite Prozedur P2 (ungewollte Inselprozedur) aufgerufen. Sollte der aktuelle Zählerstand N des ersten Zählers kleiner sein als der zweite Grenzwert Limit 2, dann wird in einem Schritt bzw. einer Abfrage P1-4 der aktuelle Zählerstand N mit einem ersten Grenzwert Limit 1 verglichen.

Falls bei dieser Abfrage P1-4 herauskommt, dass der aktuelle Zählerstand N kleiner ist als der erste Grenzwert Limit 1, dann wird der Energiespeicher bzw. das Energiespeichersystem in einem sog. U/f Modus betrieben. In diesem Betriebsmodus wird der Energiespeicher so betrieben, dass für das Mikronetz ein Sollwert für die Spannung U und/oder ein Sollwert für die Frequenz angestrebt wird. In dem Diagramm von Figur 4 ist der entsprechende Block mit dem Bezugszeichen P1-51 versehen. Ferner wird davon ausgegangen, dass sich das Mikronetz in dem Normalzustand befindet. Ohne eine Änderung des erste Zählers N beginnt das beschriebene Verfahren von neuem mit dem Schritt S0 (vgl. Figur 3, "Start")).

Es wird darauf hingewiesen, dass, sofern sich der Zustand des Mikronetzes nicht ändert, bei einem erneuten Durchlaufen des beschriebenen Verfahrens wiederum die erste Prozedur aufgerufen werden wird. Bei diesem weiteren Aufruf wird jedoch in dem Schritt P1-2 erneut der ersten Zähler um den Wert Eins inkrementiert. Dies kann zur Folge haben, dass dann der Zählerstand N des ersten Zählers größer ist als oder gleich ist wie der zweite Grenzwert. Dies führt dann, wie aus dem oberen Teil von Figur 4 ersichtlich, zu einem Aufruf der zweiten Prozedur P2 (ungewollte Inselprozedur).

Falls bei der Abfrage P1-4 herauskommt, dass der aktuelle Zählerstand N größer ist als oder gleich ist wie der erste Grenzwert Limit 1, dann ergeht in einem Schritt P1-52 eine Warnmitteilung an ein zentrales Steuersystem des Mikronetzes. Danach wird beginnend mit einem Schritt P1-6 untersucht, wie das Mikronetz auf eine Veränderung des Sollwertes ("Δfref") für die Frequenz des Mikronetzes reagiert. Dazu wird in dem Block P1-6 dieser Sollwert fref verändert. In einem darauffolgenden Schritt P1-7 wird dann die Frequenz f des Mikronetzes gemessen.

Sollte sich herausstellen, dass die Frequenz f des Mikronetzes zumindest nicht innerhalb einer gewissen Bandbreite und einer gewissen Zeitspanne der Vorgabe durch den geänderten Sollwert folgt, dann deutet dies darauf hin, dass übergeordnete Stromnetz das Mikronetz mit elektrischer Leistung versorgt. In diesem Fall wird davon ausgegangen, dass sich das Mikronetz in dem Normalzustand befindet. Ohne eine Änderung des Wertes N des ersten Zählers beginnt das beschriebene Verfahren von neuem mit dem Schritt S0 (vgl. Figur 3).

Falls sich die Frequenz des Mikronetzes zumindest innerhalb einer gewissen Toleranz und innerhalb einer gewissen Zeitspanne mit der Veränderung des Sollwertes ändert, dann wird in einem Schritt P1-8 abgefragt, ob zusätzliche Lasten zugeschaltet werden können. Diese Lasten können insbesondere Lasten sein, die aktuell dem übergeordneten Stromnetz zugeordnet sind. Falls eine Zuschaltung solcher Lasten möglich ist, dann wird auch hier davon ausgegangen, dass sich das Mikronetz in dem Normalzustand befindet. Ohne eine Änderung des Wertes N des ersten Zählers beginnt das beschriebene Verfahren von neuem mit dem Schritt S0 (vgl. Figur 3). Sollte jedoch keine Zuschaltung von Lasten möglich sein, dann wird die zweite Prozedur P2 aufgerufen, die nachfolgend anhand von Figur 5 im Detail erläutert wird.

Figur 5 illustriert den Ablauf dieser zweiten Prozedur P2, die als ungewollte Inselprozedur bezeichnet wird. Die zweite Prozedur P2 beginnt mit einem Schritt P2-1. Der Energiespeicher wird zunächst in dem vorstehend beschriebenen U/f Modus betrieben (vgl. Block P2-2), um die Spannung und die Frequenz in dem Mikronetz möglichst stabil zu halten. Dann wird in einem Schritt P2-3 der Wert M eines zweiten Zählers auf den Wert Null gesetzt. In einem darauffolgenden Schritt P2-4 findet eine zumindest vorübergehende Entkopplung zwischen dem Mikronetz und dem übergeordneten Stromnetz statt. Dies geschieht gemäß dem hier dargestellten Ausführungsbeispiel durch eine Öffnung eines Leistungsschalters an einem Verknüpfungspunkt (Point of Common Coupling, PoCC) zwischen beiden Netzen. Dadurch wird eine gewisse Stabilität des Mikronetzes ermöglicht. Insbesondere kann zu diesem Zweck das Energiespeichersystem bzw. der Energiespeicher auf geeignete Weise angesteuert bzw. betrieben werden.

In einem darauffolgenden Schritt P2-5 wird die Frequenz f_{MG} und/oder die Spannung U_{MG} des Mikronetzes gemessen.
(A) Falls sich die Frequenz f_{MG} und die Spannung U_{MG} innerhalb eines erlaubten Bereiches befinden (z.B. +-10% um einen bestimmten Nominalwert), dann wird in einem Schritt P2-61 die Spannung U und die Frequenz f des übergeordneten Stromnetzes gemessen. Falls die entsprechenden Werte für die Spannung U und die Frequenz f nicht innerhalb eines vorbestimmten zulässigen Bereiches liegen, dann wird das Verfahren mit Schritt P2-5 fortgesetzt. Andernfalls wird eine Synchronisierungsprozedur ("Sync") gestartet (vgl. Block P2-71). Dabei wird die Frequenz f_{MG} und die Phase des Mikronetzes an Frequenz f und Phase des übergeordneten Stromnetzes angepasst. Sobald die Synchronisierung erfolgreich abgeschlossen ist, wird durch ein Schließen des Leistungsschalters an dem PoCC die Kopplung zwischen dem Mikronetz und dem übergeordneten Netz wieder hergestellt (vgl. Block P2-81) und es wird davon ausgegangen, dass sich das Mikronetz in dem Normalzustand befindet. Das beschriebene Verfahren beginnt dann von neuem mit dem Schritt S0 (vgl. Figur 3).
(B) Falls in dem Schritt P2-5 festgestellt wird, dass die Frequenz f_{MG} und die Spannung U_{MG} nicht innerhalb des erlaubten Bereiches liegen, dann wird der Wert M des zweiten Zählers um Eins inkrementiert (vgl. Schritt P2-62). Danach wird (erneut) die Frequenz f_{MG} des Mikronetzes gemessen (vgl. Schritt P2-72)

(B1) Falls nun die Frequenz f_{MG} des Mikronetzes kleiner ist als ein vorbestimmter Grenzwert (Limit), dann wird in einem Schritt P2-82a der aktuelle Wert M des zweiten Zählers abgefragt. Falls dieser Wert M kleiner ist als der vorbestimmte Grenzwert (Limit), dann erfolgt eine Lastabschaltung (vgl. Block PL). Dabei werden in einer vorbestimmten Reihenfolge elektrische Lasten von dem Mikronetz getrennt. Danach wird das Verfahren mit dem Schritt P2-5 weiter geführt. Falls der aktuelle Wert M größer ist als oder gleich ist wie der vorbestimmte Grenzwert (Limit), dann wird für das Mikronetz ein Notfallmodus PE aufgerufen. Dabei wird mittels geeigneter Schutzmaßnahmen wie beispielsweise einer Öffnung von zumindest einem Leistungsschalter das Mikronetz abgeschalten und eine Zerstörung von Komponenten des Mikronetzes verhindert.

(B1) Falls sich in dem Schritt P2-72 herausstellt, dass die Frequenz f_{MG} des Mikronetzes größer ist als oder zumindest gleich ist wie der vorbestimmte Grenzwert (Limit), dann deutet dies darauf hin, dass die an dem Mikronetz angeschlossenen Stromerzeuger mehr Leistung erzeugen als von den an dem Mikronetz angeschlossenen elektrischen Verbrauchern konsumiert wird. In einem darauf folgenden Schritt P2-82b wird der aktuelle Wert M des zweiten Zählers abgefragt. Falls sich herausstellt, dass dieser Wert M kleiner ist als der vorbestimmte Grenzwert (Limit), dann erfolgt eine Abschaltung von Stromerzeugern (vgl. Block PG). Dabei werden in einer vorbestimmten Reihenfolge Stromerzeuger heruntergefahren und/oder von dem Mikronetz getrennt. Danach wird das Verfahren mit dem Schritt P2-5 weiter geführt. Falls der Wert M größer ist als oder gleich ist wie der vorbestimmte Grenzwert, dann wird für das Mikronetz der vorstehend beschriebene Notfallmodus PE aufgerufen.

### Bezugszeichenliste

- 100: übergeordnetes Stromnetz
- 110: Stromnetz / Mikronetz
- 112: Strommessgerät für den Strom I zwischen Mikronetz 110 und übergeordnetem Stromnetz 100
- 114: Messeinrichtung für Spannung U und/oder Frequenz f des übergeordneten Stromnetzes 100
- 120: Transformator
- 122: Strommessgerät für den Strom I zwischen Mikronetz 110 und übergeordnetem Stromnetz 100
- 124: Messeinrichtung für Spannung U_{MG} und/oder Frequenz f_{MG} des Mikronetzes 110
- 130: Stromleitung
- 132: Energieerzeuger
- 134: regenerativer Energieerzeuger
- 136: Energiespeicher
- 138: Last

- 241: erstes Fenster
- 242: erster Bereich
- 243: zweites Fenster
- 244: zweiter Bereich
- 245: drittes Fenster
- 246: dritter Bereich

- 352: erster Ast
- 354: zweiter Ast
- 356: dritter Ast

- S0: Ausgangszustand
- S1: Erfassung der Leistung P
- S23: Zurücksetzen von erstem Zähler N
- S31,S32,S33: Messung U/f
- S41,S42,S43: Messung U/f
- P1: erste Prozedur / Stabilitätsprozedur
- P2: zweite Prozedur / ungewollte Inselprozedur
- P1-1: Beginn Prozedur P1
- P1-2: Inkrementierung erster Zähler N
- P1-3: Abfrage Zahlerstand N erster Zähler
- P1-4: Abfrage Zahlerstand N erster Zähler
- P1-51: Energiespeichersystem im U/f Modus
- P1-52: Warnmitteilung an zentrales Steuersystem
- P1-6: Messung Antwort des Mikronetzes auf Änderung von Sollwert für Frequenz
- P1-7: Messung Frequenz
- P1-8: Abfrage: Zuschaltung von Lasten möglich ?
- Limit 1: erster Grenzwert
- Limit 2: zweiter Grenzwert
- P2-1: Beging Prozedur P2
- P2-2: Energiespeichersystem im U/f Modus
- P2-3: Nullsetzen von zweitem Zähler
- P2-4: Entkopplung zwischen Mikronetz und übergeordnetem Stromnetz
- P2-5: Messung Frequenz f_{MG} und die Spannung U_{MG} des Mikronetzes
- P2-61: Messung Spannung U und Frequenz f von übergeordnetem Stromnetzes
- P2-62: Inkrementierung zweiter Zähler
- P2-71: Synchronisierungsprozedur
- P2-72: Messung Frequenz f_{MG} des Mikronetzes
- P2-81: Kopplung Mikronetz mit übergeordnetem Stromnetz
- P2-82a: Abfrage aktueller Wert M des zweiten Zählers
- P2-82b: Abfrage aktueller Wert M des zweiten Zählers
- PE: Notfallmodus
- PL: Abschaltung von elektrischen Lasten
- PG: Abschaltung von Stromerzeugern

## Patentansprüche

1. Verfahren zum Stabilisieren eines an einem übergeordneten Stromnetz (100) angeschlossenen elektrischen Stromnetzes (110), wobei das elektrische Stromnetz (110) zumindest ein angeschlossenes Energiespeichersystem aufweist, das Verfahren aufweisend
Festlegen eines ersten Bereiches (242) für eine elektrische Größe (U, f) des Stromnetzes (110) um einen Sollwert;
Festlegen eines zweiten Bereiches (244) für die elektrische Größe (U, f) des Stromnetzes (110) um den Sollwert, wobei der zweite Bereich (244) größer ist als der erste Bereich (242) und kleiner ist als ein dritter Bereich (246) um den Sollwert, wobei der dritte Bereich (246) einer Abschaltung von zumindest einem Teil des Stromnetzes (110) zugeordnet ist;
Erfassen der elektrischen Größe (U, f);
Vergleichen der erfassten elektrischen Größe (U, f) mit dem ersten Bereich (242) und mit dem zweiten Bereich (244), und
(a) wenn die elektrische Größe (U, f) innerhalb des ersten Bereichs (242) liegt,
Charakterisieren des Zustands des Stromnetzes (110) als ein Normalzustand (S0);
(b) wenn die elektrische Größe (U, f) außerhalb des ersten Bereichs (242) und innerhalb des zweiten Bereichs (244) liegt und sich das Stromnetz (110) in einem ersten Betriebszustand, in dem elektrische Leistung von dem Stromnetz (110) an das übergeordnete Stromnetz transferiert wird, oder in einem zweiten Betriebszustand, in dem eine elektrische Leistungsbilanz zwischen dem Stromnetz (110) und dem übergeordneten Stromnetz zumindest annähernd ausgeglichen ist, befindet,
Aufrufen einer ersten Prozedur (P1) zum Stabilisieren des Stromnetzes (110), bei welcher ein erster Zähler inkrementiert wird und der weitere Verlauf der ersten Prozedur (P1) von dem Stand (N) des ersten Zählers abhängt; und
(c) wenn die elektrische Größe (U, f) außerhalb des zweiten Bereichs (244) liegt,
Aufrufen einer zweiten Prozedur (P2) zum Stabilisieren des Stromnetzes (110), bei welcher ein zweiter Zähler inkrementiert wird und der weitere Verlauf der zweiten Prozedur von dem Stand (M) des zweiten Zählers abhängt, wobei die zweite Prozedur (P2) zum Stabilisieren des Stromnetzes (110) ein Entkoppeln des Stromnetzes (110) vom übergeordneten Stromnetz umfasst.

2. Verfahren gemäß dem vorangehenden Anspruch, wobei
der erste Bereich (242) vollständig in dem zweiten Bereich (244) enthalten ist, und/oder
der zweite Bereich (244) vollständig in dem dritten Bereich (246) enthalten ist.

3. Verfahren gemäß einem der vorangehenden Ansprüche, wobei die elektrische Größe (U, f) erst dann als außerhalb des ersten Bereiches (242), des zweiten Bereiches (244) bzw. des dritten Bereiches (246) liegend betrachtet wird, wenn die Größe (U, f) für eine vorbestimmte Zeitspanne außerhalb des betreffenden Bereiches (242, 244, 246) liegt.

4. Verfahren gemäß einem der vorangehenden Ansprüche, wobei
die elektrische Größe ein Vektor mit zumindest zwei Komponenten (U, f) ist und
der erste Bereich (242), der zweite Bereich (244) und/oder der dritte Bereich (246) ein entsprechend der Dimensionalität des Vektors mehrdimensionaler Bereich ist.

5. Verfahren gemäß einem der vorangehenden Ansprüche, wobei nach einer Charakterisierung des Zustandes des Stromnetzes (110) als Normalzustand (S0) das Verfahren erneut ausgeführt wird.

6. Verfahren gemäß einem der vorangehenden Ansprüche, wobei
- in einem dritten Betriebszustand elektrische Leistung von dem übergeordneten Stromnetz (100) in das Stromnetz (110) transferiert wird, wobei das Verfahren ferner aufweist
Bestimmen, ob sich das Stromnetz (110) in dem ersten Betriebszustand, in dem zweiten Betriebszustand oder in dem dritten Betriebszustand befindet, und
(b') wenn die elektrische Größe (U, f) außerhalb des ersten Bereichs (242) und innerhalb des zweiten Bereichs (244) liegt und sich das Stromnetz (110) in dem dritten Betriebszustand befindet,
Charakterisieren des Zustands des Stromnetzes (110) als der Normalzustand (S0).

7. Verfahren gemäß einem der vorangehenden Ansprüche, wobei die erste Prozedur (P1) aufweist
Vergleichen (P1-3) des inkrementierten ersten Zählers mit einem zweiten Schwellenwert (Limit 2) und
(a) wenn der Wert (N) des ersten Zählers größer ist als oder gleich ist wie der zweite Schwellenwert (Limit 2),
Aufrufen der zweiten Prozedur (P2); und
(b) wenn der Wert des ersten Zählers (N) kleiner ist als der zweite Schwellenwert (Limit 2),
Vergleichen (P1-4) des inkrementierten ersten Zählers mit einem ersten Schwellenwert (Limit 1), wobei der weitere Verlauf der ersten Prozedur (P1) von dem Ergebnis des Vergleichens (P1-4) abhängt.

8. Verfahren gemäß dem vorangehenden Anspruch, wobei die erste Prozedur (P1) ferner aufweist
(a) wenn der Wert (N) des ersten Zählers kleiner ist als der erste Schwellenwert (Limit 1),
Charakterisieren des Zustands des Stromnetzes (110) als der Normalzustand (S0), und
(b) wenn der Wert des ersten Zählers (N) größer ist als oder gleich ist wie der erste Schwellenwert (Limit 1),
Erfassen (P1-7) einer weiteren elektrischen Größe (f) des übergeordneten Stromnetzes (100) und
Vergleichen der erfassten weiteren elektrischen Größe (f) mit einem weiteren Sollwert für die weitere elektrischen Größe (f), wobei der weitere Verlauf der ersten Prozedur (P1) von dem Ergebnis des Vergleichens abhängt.

9. Verfahren gemäß dem vorangehenden Anspruch, wobei die erste Prozedur (P1) ferner aufweist
(a) wenn die weitere elektrische Größe (f) innerhalb einer vorgegebenen Toleranz gleich ist wie der weitere Sollwert, Charakterisieren des Zustands des Stromnetzes (110) als der Normalzustand (S0); und
(b) wenn die weitere elektrische Größe (f) unter Berücksichtigung der vorgegebenen Toleranz ungleich ist wie der weitere Sollwert,
Überprüfen (P1-8), ob oder ob nicht zumindest eine zusätzliche externe elektrische Last für das Stromnetz (110) verfügbar ist und in zulässiger Weise zuschaltbar ist, wobei der weitere Verlauf der ersten Prozedur (P1) von dem Ergebnis des Überprüfens (P1-8) abhängt.

10. Verfahren gemäß dem vorangehenden Anspruch, wobei die erste Prozedur (P1) ferner aufweist
(a) wenn zumindest eine zusätzliche externe elektrische Last für das Stromnetz verfügbar ist und in zulässiger Weise zuschaltbar ist,
Zuschalten dieser zumindest einen zusätzlichen externen elektrischen Last; und
Charakterisieren des Zustands des Stromnetzes als der Normalzustand (S0); und
(b) wenn zumindest eine zusätzliche externe elektrische Last für das Stromnetz nicht verfügbar ist und/oder nicht in zulässiger Weise zuschaltbar ist,
Aufrufen der zweiten Prozedur (P2).

11. Verfahren gemäß einem der vorangehenden Ansprüche, wobei die zweite Prozedur (P2) aufweist
Setzen (P2-3) des zweiten Zählers auf den Wert Null;
Öffnen (P2-4) einer elektrischen Verbindung zwischen dem Stromnetz (110) und dem übergeordneten Stromnetz (100);
erneutes Erfassen der elektrischen Größe (U_{MG}, f_{MG}) des Stromnetzes (110); und
Vergleichen der erneut erfassten elektrischen Größe des Stromnetzes mit einem vorgegebenen Sollbereich für die elektrischen Größe (U_{MG}, f_{MG}), wobei der weitere Verlauf der zweiten Prozedur (P2) von dem Ergebnis des Vergleichens abhängt.

12. Verfahren gemäß dem vorangehenden Anspruch, wobei die zweite Prozedur (P2) ferner aufweist:
(a) wenn die erneut erfasste elektrischen Größe (U_{MG}, f_{MG}) innerhalb des vorgegebenen Sollbereichs für die elektrische Größe liegt,
Erfassen einer weiteren elektrischen Größe (U, f) des übergeordneten Stromnetzes (100), wobei der weitere Verlauf der zweiten Prozedur (P2) von der erfassten weiteren elektrischen Größe (U, f) des übergeordneten Stromnetzes (100) abhängt; und
(b) wenn die erneut erfasste elektrischen Größe (U_{MG}, f_{MG}) außerhalb des vorgegebenen Sollbereichs für die elektrischen Größe liegt,
Inkrementieren (P2-62) des zweiten Zählers und
Vergleichen (P2-72) der erneut erfassten elektrischen Größe (f_{MG}) des Stromnetzes (110) mit einem vorgegebenen Grenzwert (f_{Limit}), wobei der weitere Verlauf der zweiten Prozedur (P2) von dem Ergebnis des Vergleichens (P2-72) und dem Wert (M) des zweiten Zählers abhängt.

13. Verfahren gemäß dem vorangehenden Anspruch, wobei die zweite Prozedur (P2) ferner aufweist:
(a) wenn die erneut erfasste elektrische Größe (f_{MG}) des Stromnetzes (110) kleiner ist als der vorgegebene Grenzwert (f_{Limit}) und der Wert (M) des zweiten Zählers kleiner ist als ein vorgegebener Zählerwert (Limit),
Entfernen (PL) von zumindest einer elektrischen Last von dem Stromnetz (110);
(b) wenn die erneut erfasste elektrische Größe (f_{MG}) des Stromnetzes (110) kleiner ist als der vorgegebene Grenzwert (f_{Limit}) und der Wert (M) des zweiten Zählers größer ist als oder gleich ist wie der vorgegebene Zählerwert (Limit),
Überführen des Stromnetzes in einem Notfallmodus (PE);
(c) wenn die erneut erfasste elektrische Größe (f_{MG}) des Stromnetzes (110) größer ist als der vorgegebene Grenzwert (f_{Limit}) und der Wert (M) des zweiten Zählers kleiner ist als der vorgegebene Zählerwert (Limit),
Abschalten (PG) von zumindest einem Stromerzeuger von dem Stromnetz (110); und
(d) wenn die erneut erfasste elektrische Größe (f_{MG}) des Stromnetzes (110) größer ist als der vorgegebene Grenzwert (f_{Limit}) und der Wert (M) des zweiten Zählers größer ist als oder gleich ist wie der vorgegebene Zählerwert (Limit),
Überführen des Stromnetzes in den Notfallmodus (PE).

14. Vorrichtung zum Stabilisieren eines an einem übergeordneten Stromnetz (100) angeschlossenen elektrischen Stromnetzes (110) mittels eines Verfahrens gemäß einem der vorangehenden Ansprüche, wobei das elektrische Stromnetz (110) zumindest ein angeschlossenes Energiespeichersystem aufweist, die Vorrichtung aufweisend
eine Erfassungseinrichtung (122, 124) zum Erfassen einer elektrischen Größe (U, f) des Stromnetzes (110);
eine Vergleichseinrichtung zum Vergleichen der erfassten elektrischen Größe (U, f) mit einem ersten Bereich (242) und mit einem zweiten Bereich (244), wobei
der erste Bereich (242) und der zweite Bereich (244) jeweils um einen Sollwert für die elektrische Größe (U, f) herum festgelegt sind, wobei der zweite Bereich (244) größer ist als der erste Bereich (242) und kleiner ist als ein dritter Bereich (246) um den Sollwert, wobei der dritte Bereich (246) einer Abschaltung von zumindest einem Teil des Stromnetzes (110) zugeordnet ist; und
eine Datenverarbeitungseinrichtung, welche programmtechnisch eingerichtet zum:
(a) wenn die elektrische Größe (U, f) innerhalb des ersten Bereichs (242) liegt,
Charakterisieren des Zustands des Stromnetzes (110) als ein Normalzustand (S0);
(b) wenn die elektrische Größe (U, f) außerhalb des ersten Bereichs (242) und innerhalb des zweiten Bereichs (244) liegt und sich das Stromnetz (110) in einem ersten Betriebszustand, in dem elektrische Leistung von dem Stromnetz (110) an das übergeordnete Stromnetz transferiert wird, oder in einem zweiten Betriebszustand, in dem eine elektrische Leistungsbilanz zwischen dem Stromnetz (110) und dem übergeordneten Stromnetz zumindest annähernd ausgeglichen ist, befindet,
Aufrufen einer ersten Prozedur (P1) zum Stabilisieren des Stromnetzes (110), bei welcher ein erster Zähler inkrementiert wird und der weitere Verlauf der ersten Prozedur (P1) von dem Stand (N) des ersten Zählers abhängt; und
(c) wenn die elektrische Größe (U, f) außerhalb des zweiten Bereichs (244) liegt
Aufrufen einer zweiten Prozedur (P2) zum Stabilisieren des Stromnetzes (110), bei welcher ein zweiter Zähler inkrementiert wird und der weitere Verlauf der zweiten Prozedur (P2) von dem Stand (M) des zweiten Zählers abhängt, wobei die zweite Prozedur (P2) zum Stabilisieren des Stromnetzes (110) ein Entkoppeln des Stromnetzes (110) vom übergeordneten Stromnetz umfasst.

15. Computerprogramm zum Stabilisieren eines elektrischen Stromnetzes (110), wobei das Computerprogramm, wenn es von einer Datenverarbeitungseinrichtung ausgeführt wird, zum Durchführen des Verfahrens gemäß einem der Ansprüche 1 bis 13 eingerichtet ist.

## Claims

1. Method for stabilizing an electrical power grid (110) connected to a superordinate power grid (100), wherein the electrical power grid (110) has at least one connected energy storage system, the method comprising:
defining a first range (242) for an electrical variable (U, f) of the power grid (110) around a setpoint value;
defining a second range (244) for the electrical variable (U, f) of the power grid (110) around the setpoint value, wherein the second range (244) is greater than the first range (242) and is smaller than a third range (246) around the setpoint value, wherein the third range (246) is associated with deactivation of at least part of the power grid (110);
detecting the electrical variable (U, f);
comparing the detected electrical variable (U, f) to the first range (242) and to the second range (244), and
(a) if the electrical variable (U, f) is within the first range (242),
characterizing the state of the power grid (110) as a normal state (S0);
(b) if the electrical variable (U, f) is outside of the first range (242) and within the second range (244) and the power grid (110) is in a first operating state in which electrical power is transferred from the power grid (110) to the superordinate power grid, or in a second operating state in which an electrical power balance between the power grid (110) and the superordinate power grid is at least approximately equalized,
calling a first procedure (P1) for stabilizing the power grid (110), in which a first counter is incremented and the further progression of the first procedure (P1) depends on the reading (N) of the first counter; and
(c) if the electrical variable (U, f) is outside of the second range (244),
calling a second procedure (P2) for stabilizing the power grid (110), in which a second counter is incremented and the further progression of the second procedure depends on the reading (M) of the second counter, wherein the second procedure (P2) for stabilizing the power grid (110) comprises decoupling the power grid (110) from the superordinate power grid.

2. Method according to the preceding claim, wherein
the first range (242) is completely contained in the second range (244), and/or
the second range (244) is completely contained in the third range (246).

3. Method according to either of the preceding claims, wherein the electrical variable (U, f) is only considered to be outside of the first range (242), of the second range (244) or of the third range (246) if the variable (U, f) is outside of the relevant range (242, 244, 246) for a predetermined time period.

4. Method according to one of the preceding claims, wherein the electrical variable is a vector with at least two components (U, f), and
the first range (242), the second range (244) and/or the third range (246) are/is a range that is multidimensional in accordance with the dimensionality of the vector.

5. Method according to one of the preceding claims, wherein the method is carried out again after the state of the power grid (110) has been characterized as the normal state (S0).

6. Method according to one of the preceding claims, wherein
- electrical power is transferred from the superordinate power grid (100) to the power grid (110) in a third operating state, wherein the method also comprises:
determining whether the power grid (110) is in the first operating state, in the second operating state or in the third operating state, and
(b') if the electrical variable (U, f) is outside of the first range (242) and within the second range (244) and the power grid (110) is in the third operating state,
characterizing the state of the power grid (110) as the normal state (S0).

7. Method according to one of the preceding claims, wherein the first procedure (P1) comprises:
comparing (P1-3) the incremented first counter to a second threshold value (Limit 2), and
(a) if the value (N) of the first counter is greater than or equal to the second threshold value (Limit 2),
calling the second procedure (P2); and
(b) if the value of the first counter (N) is smaller than the second threshold value (Limit 2),
comparing (P1-4) the incremented first counter to a first threshold value (Limit 1), wherein the further progression of the first procedure (P1) depends on the result of the comparison (P1-4).

8. Method according to the preceding claim, wherein the first procedure (P1) also comprises:
(a) if the value (N) of the first counter is smaller than the first threshold value (Limit 1),
characterizing the state of the power grid (110) as the normal state (S0), and
(b) if the value of the first counter (N) is greater than or equal to the first threshold value (Limit 1),
detecting (P1-7) a further electrical variable (f) of the superordinate power grid (100), and
comparing the detected further electrical variable (f) to a further setpoint value for the further electrical variable (f), wherein the further progression of the first procedure (P1) depends on the result of the comparison.

9. Method according to the preceding claim, wherein the first procedure (P1) also comprises:
(a) if the further electrical variable (f), within a predefined tolerance, is equal to the further setpoint value,
characterizing the state of the power grid (110) as the normal state (S0); and
(b) if the further electrical variable (f), taking the predefined tolerance into account, is not equal to the further setpoint value,
checking (P1-8) whether or not at least one additional external electrical load is available for the power grid (110) and can be connected in a permissible manner, wherein the further progression of the first procedure (P1) depends on the result of the checking (P1-8).

10. Method according to the preceding claim, wherein the first procedure (P1) also comprises:
(a) if at least one additional external electrical load is available for the power grid and can be connected in a permissible manner,
connecting this at least one additional external electrical load; and
characterizing the state of the power grid as the normal state (S0); and
(b) if at least one additional external electrical load is not available for the power grid and/or cannot be connected in a permissible manner,
calling the second procedure (P2).

11. Method according to one of the preceding claims, wherein the second procedure (P2) comprises:
setting (P2-3) the second counter to the value of zero;
opening (P2-4) an electrical connection between the power grid (110) and the superordinate power grid (100);
detecting the electrical variable (U_{MG}, f_{MG}) of the power grid (110) again; and
comparing the electrical variable, which has been detected again, of the power grid to a predefined target range for the electrical variable (U_{MG}, f_{MG}), wherein the further progression of the second procedure (P2) depends on the result of the comparison.

12. Method according to the preceding claim, wherein the second procedure (P2) also comprises:
(a) if the electrical variable (U_{MG}, f_{MG}), which has been detected again, is within the predefined target range for the electrical variable,
detecting a further electrical variable (U, f) of the superordinate power grid (100), wherein the further progression of the second procedure (P2) depends on the detected further electrical variable (U, f) of the superordinate power grid (100); and
(b) if the electrical variable (U_{MG}, f_{MG}), which has been detected again, is outside of the predefined target range for the electrical variable,
incrementing (P2-62) the second counter and
comparing (P2-72) the electrical variable (f_{MG}), which has been detected again, of the power grid (110) to a predefined limit value (f_{Limit}), wherein the further progression of the second procedure (P2) depends on the result of the comparison (P2-72) and the value (M) of the second counter.

13. Method according to the preceding claim, wherein the second procedure (P2) also comprises:
(a) if the electrical variable (f_{MG}), which has been detected again, of the power grid (110) is smaller than the predefined limit value (f_{Limit}) and the value (M) of the second counter is smaller than a predefined counter value (Limit),
removing (PL) at least one electrical load from the power grid (110);
(b) if the electrical variable (f_{MG}), which has been detected again, of the power grid (110) is smaller than the predefined limit value (f_{Limit}) and the value (M) of the second counter is greater than or equal to the predefined counter value (Limit),
putting the power grid into an emergency mode (PE);
(c) if the electrical variable (f_{MG}), which has been detected again, of the power grid (110) is greater than the predefined limit value (f_{Limit}) and the value (M) of the second counter is smaller than the predefined counter value (Limit),
disconnecting (PG) at least one power generator from the power grid (110); and
(d) if the electrical variable (f_{MG}), which has been detected again, of the power grid (110) is greater than the predefined limit value (f_{Limit}) and the value (M) of the second counter is greater than or equal to the predefined counter value (Limit),
putting the power grid into the emergency mode (PE).

14. Apparatus for stabilizing an electrical power grid (110) connected to a superordinate power grid (100) by means of a method according to one of the preceding claims, wherein the electrical power grid (110) has at least one connected energy storage system, the apparatus comprising:
a detection device (122, 124) for detecting an electrical variable (U, f) of the power grid (110);
a comparison device for comparing the detected electrical variable (U, f) to a first range (242) and to a second range (244), wherein
the first range (242) and the second range (244) are each defined around a setpoint value for the electrical variable (U, f), wherein the second range (244) is greater than the first range (242) and is smaller than a third range (246) around the setpoint value, wherein the third range (246) is associated with deactivation of at least part of the power grid (110); and
a data processing device that is configured in terms of programming for:
(a) if the electrical variable (U, f) is within the first range (242),
characterizing the state of the power grid (110) as a normal state (S0);
(b) if the electrical variable (U, f) is outside of the first range (242) and within the second range (244) and the power grid (110) is in a first operating state in which electrical power is transferred from the power grid (110) to the superordinate power grid, or in a second operating state in which an electrical power balance between the power grid (110) and the superordinate power grid is at least approximately equalized,
calling a first procedure (P1) for stabilizing the power grid (110), in which a first counter is incremented and the further progression of the first procedure (P1) depends on the reading (N) of the first counter; and
(c) if the electrical variable (U, f) is outside of the second range (244),
calling a second procedure (P2) for stabilizing the power grid (110), in which a second counter is incremented and the further progression of the second procedure (P2) depends on the reading (M) of the second counter, wherein the second procedure (P2) for stabilizing the power grid (110) comprises decoupling the power grid (110) from the superordinate power grid.

15. Computer program for stabilizing an electrical power grid (110), wherein the computer program, when it is executed by a data processing device, is configured to carry out the method according to one of Claims 1 to 13.

## Revendications

1. Procédé de stabilisation d'un réseau (110) de courant électrique raccordé à un réseau (100) de courant supérieur hiérarchiquement, dans lequel le réseau (110) de courant électrique a au moins un système raccordé d'accumulation d'énergie, procédé dans lequel
on fixe une première plage (242) d'une grandeur (U, f) électrique du réseau (110) de courant autour une valeur de consigne ;
on fixe une deuxième plage (244) de la grandeur (U, f) électrique du réseau (110) de courant autour de la valeur de consigne, la deuxième plage (244) étant plus grande que la première plage (242) et plus petite qu'une troisième plage (246) autour de la valeur de consigne, la troisième plage (246) étant associée à une mise hors circuit d'au moins une partie du réseau (110) de courant ;
on relève la grandeur (U, f) électrique ;
on compare la grandeur (U, f) relevée à la première plage (242) et à la deuxième plage (244), et
(a) si la grandeur (U, f) électrique est dans la première plage (242),
on caractérise l'état du réseau (110) de courant comme étant un état (SO) normal ;
(b) si la grandeur (U, f) électrique est à l'extérieur de la première plage (242) et à l'intérieur de la deuxième plage (244) et si le réseau (110) de courant se trouve dans un premier état de fonctionnement, dans lequel on transfère de la puissance électrique du réseau (110) de courant au réseau de courant supérieur hiérarchiquement, ou dans un deuxième état de fonctionnement, dans lequel un bilan de puissance électrique entre le réseau (110) de courant et le réseau de courant supérieur hiérarchiquement est compensé au moins à peu près ;
on appelle une première procédure (P1) de stabilisation du réseau (110) de courant, dans laquelle on incrémente un premier compteur et la poursuite de la première procédure (P1) dépend du niveau (N) du premier compteur ; et
(c) si la grandeur (U, f) électrique se trouve à l'extérieur de la deuxième plage (244),
on appelle une deuxième procédure (P2) de stabilisation du réseau (110) de courant, dans laquelle on incrémente un deuxième compteur et la poursuite de la deuxième procédure dépend du niveau (M) du deuxième compteur, la deuxième procédure (P2) de stabilisation du réseau (110) de courant comprenant un découplage du réseau (110) de courant du réseau de courant supérieur hiérarchiquement.

2. Procédé suivant la revendication précédente, dans lequel
la première plage (242) est contenue entièrement dans la deuxième plage (244) et/ou
la deuxième plage (244) est contenue entièrement dans la troisième plage (246).

3. Procédé suivant l'une des revendications précédentes, dans laquelle
on ne considère la grandeur (U, f) électrique comme à l'extérieur de la première plage (242), de la deuxième plage (244) ou de la troisième plage (246), que si la grandeur (U, f) est, pendant un laps de temps déterminé à l'avance, à l'extérieur de la plage (242, 244, 246) concernée.

4. Procédé suivant l'une des revendications précédentes, dans lequel
la grandeur électrique est un vecteur ayant au moins deux composantes (U, f) et
la première plage (242), la deuxième plage (244) et/ou la troisième plage (246) est une plage pluridimensionnelle correspondant à la dimensionnalité du vecteur.

5. Procédé suivant l'une des revendications précédentes, dans lequel, après une caractérisation de l'état du réseau de courant (110) comme étant un état (SO) normal, on effectue le procédé à nouveau.

6. Procédé suivant l'une des revendications précédentes, dans lequel :
- dans un troisième état de fonctionnement, on transfère de la puissance électrique du réseau (100) de courant supérieur hiérarchiquement au réseau (110) de courant, procédé dans lequel en outre
on détermine si le réseau (110) de courant se trouve dans le premier état de fonctionnement, dans le deuxième état de fonctionnement ou dans le troisième état de fonctionnement, et (b') si la grandeur (U, f) électrique est à l'extérieur de la première plage (242) et à l'intérieur de la deuxième plage (244) et si le réseau (110) de courant se trouve dans le troisième état de fonctionnement,
on caractérise l'état du réseau (110) de courant comme étant un état (SO) normal.

7. Procédé suivant l'une des revendications précédentes, dans lequel, dans la première procédure (P1)
on compare (P1-3) le premier compteur incrémenté à une deuxième valeur (Limit 2) de seuil et
(a)si le niveau (N) du premier compteur est supérieur ou égal à la deuxième valeur (Limit 2) de seuil,
on appelle la deuxième procédure (P2) ; et
(b)si le niveau du premier compteur (N) est plus petit que la deuxième valeur (Limit 2) de seuil,
on compare (P1-4) le premier compteur incrémenté à une première valeur (Limit 1) de seuil, la poursuite de la première procédure (P1) dépendant du résultat de la comparaison (P1-4).

8. Procédé suivant la revendication précédente, dans lequel, dans la première procédure (P1) en outre
(a)si le niveau (N) du premier compteur est inférieur à la première valeur (Limit 1) de seuil,
on caractérise l'état du réseau (110) de courant comme étant l'état (SO) normal, et
(b)si le niveau du premier compteur (N) est supérieur ou égal à la première valeur (Limit 1) de seuil,
on relève (P1-7) une autre grandeur (f) électrique du réseau (100) de courant supérieur hiérarchiquement et
on compare l'autre grandeur (f) électrique relevée à une autre valeur de consigne de l'autre grandeur (f) électrique, la poursuite de la première procédure (P1) dépendant du résultat de la comparaison.

9. Procédé suivant la revendication précédente, dans lequel, dans la première procédure (P1) en outre
(a)si l'autre grandeur (f) électrique est dans une tolérance donnée à l'avance, égale à l'autre valeur de consigne,
on caractérise l'état du réseau (110) de courant comme étant l'état (SO) normal ; et
(b)si l'autre grandeur (f) électrique n'est pas, en tenant compte de la tolérance donnée à l'avance, égale à l'autre valeur de consigne,
on contrôle (P1-8) si ou non au moins une charge électrique extérieure supplémentaire est à la disposition du réseau (110) de courant et peut être mise en circuit de manière admissible, la poursuite de la première procédure (P1) dépendant du résultat du contrôle (P1-8).

10. Procédé suivant la revendication précédente, dans lequel, dans la première procédure (P1) en outre
(a)si au moins une charge électrique extérieure supplémentaire est à la disposition du réseau de courant et peut être mise en circuit de manière admissible,
on met en circuit cette au moins une charge électrique extérieure supplémentaire ; et
on caractérise l'état du réseau de courant comme étant l'état (SO) normal ; et
(b)si au moins une charge électrique extérieure supplémentaire n'est pas à la disposition du réseau de courant et/ou ne peut pas être mise en circuit d'une manière admissible,
on appelle la deuxième procédure (P2).

11. Procédé suivant l'une des revendications précédentes, dans lequel, dans la deuxième procédure (P2),
on met (P2-3) le deuxième compteur au niveau zéro ;
on ouvre (P2-4) une liaison électrique entre le réseau (110) et le réseau (100) de courant supérieur hiérarchiquement ;
on relève à nouveau la grandeur (U_{MG}, f_{MG}) électrique du réseau (110) de courant ; et
on compare la grandeur électrique relevée à nouveau du réseau de courant à une plage de consigne donnée à l'avance de la grandeur (U_{MG}, f_{MG}) électrique, la poursuite de la deuxième procédure (P2) dépendant du résultat de la comparaison.

12. Procédé suivant la revendication précédente, dans lequel, dans la deuxième procédure (P2) en outre :
(a) si la grandeur (U_{MG}, f_{MG}) électrique relevée à nouveau est à l'intérieur de la plage de consigne donnée à l'avance de la grandeur électrique,
on relève une autre grandeur (U, f) électrique du réseau (100) de courant supérieur hiérarchiquement, la poursuite de la deuxième procédure (P2) dépendant de l'autre grandeur (U, f) électrique relevée du réseau (100) de courant supérieur hiérarchiquement ; et
(b)si la grandeur (U_{MG}, f_{MG}) électrique relevée à nouveau est à l'extérieur de la plage de consigne donnée à l'avance de la grandeur électrique,
on incrémente (P2-62) le deuxième compteur et
on compare (P2-72), la grandeur (f_{MG}) électrique relevée à nouveau du réseau (110) de courant à une valeur (F_{Limit}) limite donnée à l'avance, la poursuite de la deuxième procédure (P2) dépendant du résultat de la comparaison de (P2-72) et du niveau (M) du deuxième compteur.

13. Procédé suivant la revendication précédente, dans lequel, dans la deuxième procédure (P2) en outre :
(a)si la grandeur (f_{MG}) électrique relevée à nouveau du réseau (110) de courant est plus petite que la valeur (f_{Limit}) limite donnée à l'avance et si le niveau (M) du deuxième compteur est inférieur à un niveau (Limit) de compteur donné à l'avance,
on retire (PL) au moins une charge électrique du réseau (110) de courant ;
(b) si la grandeur (f_{MG}) électrique relevée à nouveau du réseau (110) de courant est plus petite que la valeur (f_{Limit}) limite donnée à l'avance et si le niveau (M) du deuxième compteur est supérieur ou égal au niveau (Limit) du compteur donné à l'avance,
on fait passer le réseau de courant dans un mode (PE) en cas d'urgence ;
(c)si la grandeur (f_{MG}) électrique relevée à nouveau du réseau (110) de courant est plus grande que la valeur (f_{Limit}) limite donnée à l'avance et si le niveau (M) du deuxième compteur est inférieur au niveau (Limit) du compteur donné à l'avance,
on met (PG) au moins un producteur de courant hors du circuit du réseau (110) de courant ; et
(d)si la grandeur (f_{MG}) électrique relevée à nouveau du réseau (110) de courant est plus grande que la valeur (f_{Limit}) limite donnée à l'avance et si le niveau (M) du deuxième compteur est supérieur ou égal au niveau (Limit) du compteur donné à l'avance,
on fait passer le réseau de courant dans le mode (PE) en cas d'urgence.

14. Installation de stabilisation d'un réseau (110) de courant électrique raccordé à un réseau (100) de courant supérieur hiérarchiquement au moyen d'un procédé suivant l'une des revendications précédentes, dans laquelle le réseau (110) de courant électrique a au moins un système raccordé d'accumulation d'énergie, l'installation comportant
un dispositif (122, 124) de relevé pour relever une grandeur (U, f) électrique du réseau (110) de courant ;
un dispositif de comparaison pour comparer la grandeur (U, f) électrique relevée à une première plage (242) et à une deuxième plage (244), dans laquelle
la première plage (242) et la deuxième plage (244) sont fixées respectivement autour d'une valeur de consigne de la grandeur (U, f) électrique, la deuxième plage (244) étant plus grande que la première plage (242) et plus petite qu'une troisième plage (246) autour de la valeur de consigne, la troisième plage (246) étant associée à une mise hors circuit d'au moins une partie du réseau (110) de courant ; et
un dispositif de traitement de données, qui est conçu en technique de programmation pour :
(a)si la grandeur (U, f) électrique est dans la première plage (242),
caractériser l'état du réseau (110) de courant comme étant un état (SO) normal ;
(b) si la grandeur (U, f) électrique est à l'extérieur de la première plage (242) et à l'intérieur de la deuxième plage (244) et si le réseau (110) de courant se trouve dans un premier état de fonctionnement, dans lequel on transfère de la puissance électrique du réseau (110) de courant au réseau de courant supérieur hiérarchiquement, ou dans un deuxième état de fonctionnement, dans lequel un bilan de puissance électrique entre le réseau (110) de courant et le réseau supérieur hiérarchiquement est compensé au moins à peu près,
appeler une première procédure (P1) de stabilisation du réseau (110) de courant, dans laquelle on incrémente un premier compteur et la poursuite de la première procédure (P1) dépend du niveau (N) du premier compteur ; et
(c)si la grandeur (U, f) électrique est à l'extérieur de la deuxième plage (244),
appeler une deuxième procédure (P2) de stabilisation du réseau (110) de courant, dans laquelle on incrémente un deuxième compteur et la poursuite de la deuxième procédure (P2) dépend du niveau (M) du deuxième compteur, la deuxième procédure (P2) de stabilisation du réseau (110) de courant comprenant un découplage du réseau (110) de courant du réseau de courant supérieur hiérarchiquement.

15. Programme d'ordinateur pour la stabilisation d'un réseau (110) de courant électrique, dans lequel le programme d'ordinateur, lorsqu'il est réalisé par un dispositif de traitement de données, est conçu pour effectuer le procédé suivant l'une des revendications 1 à 13.
